(19) Europäisches Patentamt
European Patent Office
Office européen des brevets

(11) **EP 2 791 699 B1**

(12) **EUROPÄISCHE PATENTSCHRIFT**

(45) Veröffentlichungstag und Bekanntmachung des Hinweises auf die Patenterteilung:
**03.04.2019   Patentblatt 2019/14**

(21) Anmeldenummer: **12798179.3**

(22) Anmeldetag: **13.11.2012**

(51) Int Cl.:
*G01S 15/10* *(2006.01)*   *G01S 15/93* *(2006.01)*

(86) Internationale Anmeldenummer:
**PCT/EP2012/072446**

(87) Internationale Veröffentlichungsnummer:
**WO 2013/087320 (20.06.2013 Gazette 2013/25)**

(54) **VERFAHREN UND EINRICHTUNG ZUR UMFELDERFASSUNG EINES BEWEGUNGSHILFSMITTELS MITTELS VON PULSFÖRMIG AUSGESENDETEN SCHALLSIGNALEN**

METHOD AND DEVICE FOR SENSING THE SURROUNDINGS OF A MOVEMENT ASSISTANT BY MEANS OF SOUND SIGNALS WHICH ARE EMITTED IN THE FORM OF PULSES

PROCÉDÉ ET APPAREIL DE DÉTECTION DE L'ENVIRONNEMENT D'UN MOYEN AUXILIAIRE DE DÉPLACEMENT À L'AIDE DE SIGNAUX SONORES ÉMIS SOUS FORME D'IMPULSIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2011   DE 102011088225**

(43) Veröffentlichungstag der Anmeldung:
**22.10.2014   Patentblatt 2014/43**

(73) Patentinhaber: **Robert Bosch GmbH 70442 Stuttgart (DE)**

(72) Erfinder: **KARL, Matthias 76275 Ettlingen (DE)**

(56) Entgegenhaltungen:
**DE-A1- 3 806 847     US-B1- 6 690 616**

**Beschreibung**

Bereich der Erfindung

Die Erfindung betrifft ein Verfahren und eine Einrichtung zur akustischen Erfassung des Umfeldes eines Bewegungshilfsmittels sowie zum Informationsaustausch mit der Umgebung von Bewegungshilfsmitteln sowie zwischen Bewegungshilfsmitteln. Insbesondere betrifft die Erfindung eine Verfahren und eine Einrichtung zur Bestimmung der Position und/oder der Bewegung von Objekten in der Umgebung eines Bewegungshilfsmittels mittels pulsförmig ausgesendeter und an mindestens einem Objekt reflektierter Schallsignale sowie zur Unterscheidung der das Schallsignal reflektierenden Objekte anhand der Veränderungen des Schallsignals infolge der Reflexion sowie zur Informationsübertragung durch Aussenden bestimmter Signalformen aus einem Satz möglicher Signalformen. Außerdem betrifft die Erfindung Einrichtungen zur Anordnung der Akustik-Wandler, wie die Anordnung in Ausnehmungen, die Verwendung einer Abdeckvorrichtung zum Verdecken der erfindungsgemäßen, an einem Bewegungshilfsmittel angebrachten Einrichtung, die Aufteilung auf verschiedene Wandler sowie auf mehrere Teileinheiten sowie die Nutzung von Wandlern mit Mehrfachresonanzen und ein Bewegungshilfsmittel, das die erfindungsgemäße Einrichtung aufweist.

Stand der Technik

Zur akustischen Umfelderfassung von Fahrzeugen werden derzeit üblicherweise pulsweise messende Ultraschallsysteme verwendet, bei denen kurze Signalpulse von beispielsweise 0,3 ms ausgesandt werden, um anhand der Echolaufzeit und der Schallgeschwindigkeit den Abstand zu Objekten in der Umgebung des Fahrzeuges zu bestimmen. Je nach Objektabstand variiert die Laufzeit der Reflexe an den Objekten der ausgesandten Signalpulse.

Bei der akustischen Umfelderfassung bzw. Umfeldüberwachung wird der Ultraschallfrequenzbereich verwendet, da die Stärke von Störgeräuschen der Umgebung üblicherweise mit steigender Frequenz abnimmt, und der Ultraschallfrequenzbereich sich daher für eine möglichst störungsfreie Detektion anbietet.

Aus dem Stand der Technik ist bekannt, dass mit einer Steigung der Signalfrequenz beziehungsweise der Signalträgerfrequenz die Dämpfung der Signale zunimmt. Somit wird es mit zunehmender Signalfrequenz schwieriger, eine Abstandsbestimmung beziehungsweise Informationsübertragung, wie diese beispielsweise bei der ortenden aus dem Dokument DE 10 2009 027 842 A1 bekannten Fahrzeug-Fahrzeugkommunikation verwendet wird, über größere Distanzen von 10 m, 20 m oder sogar über 100 m durchzuführen.

Akustische Signale weisen im Ultraschallfrequenzbereich aufgrund der mit zunehmender Frequenz steigenden Raumdämpfung eine relativ geringe Reichweite auf. Die Reichweiten sind vergleichsweise schlechter als die bei niedrigeren Frequenzen, beispielsweise Frequenzen im Hörbereich des Menschen, erreichbaren Wirkungsgrade, und daher werden mit heutigen akustischen Umfeldsensoren nur unbefriedigende Reichweiten erzielt.

Bei der Umfelderfassung mittels Ultraschall wird aufgrund der mit steigender Signalfrequenz zunehmenden Raumdämpfung daher vorwiegend der untere Bereich des Ultraschallbandes bei typischerweise 48 kHz verwendet. Genauer gesagt wird bei denen aus dem Stand der Technik bekannten Ultraschallsystemen bedingt durch die heute übliche hohe Robustheitserfordernis und der erreichten relativ hohen Güte nur in einem schmalen Frequenzband von beispielsweise $\pm$ 2 kHz um die Trägerfrequenz des Sendesignals von beispielsweise 48 kHz gearbeitet.

Diese Frequenzwahl stellt einen Kompromiss dar, bei dem zudem nur ein geringer Teil des akustischen Mediums genutzt wird. Dabei wird aber immer noch aufgrund von zu starken Störungen bzw. der Raumdämpfung nur eine ungenügende Messreichweite erzielt. Bei größeren Objektentfernungen und daraus erfolgten Reflektionen liegen keine ausreichend starken und eindeutigen zu detektierende Echopulse vor.

Mittels einer Verlängerung einer Pulsdauer bzw. der Impulsdauer kann trotz endlicher Sendeleistung die ausgesandte und innerhalb eines Echozyklus zur Verfügung stehende Messsignalenergie erhöht werden, um auf diese Weise stärkere Echopulse zu erhalten. Auf diese Weise kann unter Umständen bei geschicktem Empfang auch die Messreichweite etwas erhöht werden. Jedoch stößt dieses Verfahren oft noch an seine Grenzen, da mit zunehmender Pulsdauer die Detektionsgüte, insbesondere die erreichbare Ortsauflösung, der zur Umfelderfassung durchgeführte Laufzeitmessung abnimmt.

Die Schallpulse können entweder breitbandig oder schmalbandig oder monofrequent ausgesendet werden. Schmalbandige Wandler bieten die Möglichkeit, dass die Signalfrequenz des Schallpulses durch einfaches Ein- bzw. Ausschalten von Sendeströmen zu generieren, da infolge der Schmalbandigkeit die beim Schalten erzeugten höheren Spektralanteile vor dem Abstrahlen herausgefiltert werden. Jedoch besteht bei schmalbandigen Signalen und im noch höheren Maße bei monofrequenten Signalen eine höhere Störanfälligkeit der darauf angepassten Empfänger, insbesondere wenn in einer Szene genau diese Frequenz gestört ist. Breitbandige Wandler zum Aussenden von Schallsignalen erfordern im Vergleich zu schmalbandigen Wandlern im Allgemeinen eine erheblich aufwändigere Generierung der Signalformen, da aufgrund der Breitbandigkeit das Signalspektrum sprunghafter Änderungen, wie sie beispielsweise beim Ein- und Ausschalten von Sendeströmen auftreten, unbarmherzig ausgesandt wird.

Ferner besteht bei auf einer Signalfrequenz pulsweise messenden monofrequenten Systemen generell der Nachteil, dass es bei Mehrfachreflexion, d.h. bei Reflexion an laufzeitmäßig einander naheliegenden Reflexpunkten zu destruktiven Überlagerungen der reflektierten Signale, genauer gesagt zu destruktiven Überlagerungen der Echos kommen kann, so dass am Empfänger eine außergewöhnlich geringe, wenn nicht sogar gar keine Signalstärke ankommt, weil die Auslöschbedingung $a_1 \cdot \sin(2\pi f_c \cdot t) + a_2 \cdot \sin(2\pi f_c \cdot t + \varphi) = 0$ erfüllt ist.

Zwar wurden Verfahren mit zeitveränderlichen Signalfrequenzen $f_c = Fkt.(\tau)$ beschrieben, bei denen eine solche Auslöschung praktisch nicht geschehen kann. Der Aufwand zu Signalerzeugung bzw. zur Echoauswertung ist dort jedoch relativ hoch, zumal praktisch nutzbare übliche Elektro-Akustik-Wandler insbesondere im Zusammenhang mit ihrer Verbausituation häufig einen ausgeprägten Frequenzgang aufweisen oder/und im Fall hoher Breitbandigkeit auch stark rauschen.

Ferner ist bei pulsweise messenden Ultraschallsystemen gerade deren naturgemäße Diskontinuität ein Nachteil: Wegen der Übertragungszykluszeit, d.h. der endlichen Laufzeit vom Sendebeginn eines Signalpulses bis zum Ende des Eintreffens des zugehörigen Signals beim Empfänger, werden Änderungen in der Objektszene nur selten und das diskontinuierlich erfasst.

Daher wurden sogenannte Pulsmusterverfahren entwickelt, wie es beispielsweise in EP2144069A2 beschrieben ist, und bei dem mehrere zeitlich nacheinander ausgesandte Pulse ein Pulsmuster ergeben, das bei geeigneter Anordnung und Auswertung nicht nur die Bestimmung der Objektabstände sondern auch der Änderung der Objektabstände zueinander, d.h., deren Bewegung, ermöglicht. In WO-2011009786 A1 wurde auch ein Intrapuls-Analyseverfahren vorgestellt, bei dem eine spezielle Frequenzanalyse durchgeführt wird, um Veränderungen des empfangenen zum ausgesandten Signals z.B. infolge von Dopplerverschiebungen leicht detektieren zu können. So können zusätzlich zum Abstand Bewegungstendenzen sowie Signalformunterschiede und somit Objektunterschiede detektiert werden, wodurch die infolge der diskontinuierlichen Arbeitsweise bedingten Blindzeiten etwas reduziert werden. Diese Verfahren erfordern aber einen hohen Analyse- und Auswertungsaufwand und somit auch hohe Kosten.

Ferner wurden auch Verfahren vorgeschlagen, bei denen gewisse Pulsmuster mit Pulsen gleicher Dauer und gleicher Trägerfrequenz verwendet werden.

Nachteilig bei solchen Verfahren ist aber die dabei erforderliche hohe Dynamik zum Empfang von Echos auf vorausgegangene Sendepulse während des Sendens nachfolgender Sendepulse und dem daran anschließenden Empfang der Echos auf nachfolgende Sendepulse, die sich dadurch bemerkbar macht, dass das System sehr leise Empfangssignalanteile, wie sie beispielsweise aufgrund langer Laufzeiten und geringer Reflektivität von Reflektoren entstehen können, von möglicherweise zeitgleich eintreffenden sehr lauten Reflexen naheliegender sehr gut reflektierenden Objekten unterscheiden muss.

Aus dem Dokument DE 102 25 614 A1 ist ein als Abstandssensor dienender Ultraschallwandler zur Bestimmung des Abstandes eines Objektes mittels der Laufzeit von aufeinanderfolgend ausgesendeten Ultraschallpulsen unterschiedlicher Frequenz bekannt. Dabei erfolgt das Aussenden der Ultraschallimpulse in nicht äquidistanten Zeitabständen, die ein 8- bis 10-faches der Sendepulsdauer betragen. Die so ineinander verschachtelten Übertragungszyklen können bei den dort vorgeschlagenen Signalfrequenzen jedoch nur bei vernachlässigbarer Relativbewegung und in solchen Szenen voneinander getrennt werden, wenn laufzeitmäßig aufeinander folgende Reflexe mehr als die Laufzeit der dort vorgeschlagenen Pulse voneinander entfernt sind. Bei einer Relativbewegung mit beispielsweise 5m/s wird hingegen ein mit 40kHz ausgesandter Puls infolge Dopplerverschiebung als Echo mit ca. 40,6kHz oder beim Entfernen mit 39,4 kHz zurückkommen. Durch Überlagerung von laufzeitmäßig eng benachbarten Reflexen kann es auch ohne Relativbewegung zu Veränderungen der resultierenden Echos infolge der Überlagerung von Einzelreflexen kommen. Das Aussenden von Ultraschallpulsen mit den dort dargestellten geringen Frequenzunterschieden ermöglicht wegen der geringen spektralen Trennbarkeit und wegen der großen zeitlichen Abstände daher noch keine eindeutige Zuordnung der Echos zu ihren Sendepulsen. Da die dort dargestellten Sendepulse alle eine gleiche Pulsdauer aufweisen, können deren Echos auch nicht anhand der Echopulsdauern den verschiedenen Sendepulsen eineindeutig zugeordnet werden.

Nachteilig dabei ist, dass die Aussendung von Ultraschallpulsen unterschiedlicher Frequenz nur aufeinanderfolgend und erst nach Pausenzeiten von mehreren Millisekunden Dauer auf ein und dem gleichen Sensor erfolgen soll. Wird während des Empfang von Echos von viele Sendepulsdauer zuvor ausgesandten Sendepulsen nochmals auf ein und dem gleichen Sensor gesendet, so erfordert das eine enorme Erhöhung des Filterungsaufwands von typischerweise mindestens dem 1000-fachen zur Trennung der Signale der jüngeren Aussendung und deren der Echos von den Echos auf die älteren Aussendungen. Eine solche Filterung ist bei solchen auf den unteren Ultraschallbereich beschränkten und dadurch eng benachbarten Frequenzbändern, wenn überhaupt, dann nur mit sehr hohem technischem Aufwand möglich.

Aus dem Dokument DE 10 2008 044 366 A1 ist es bekannt, dass durch eine Verwendung von Chirps im Ultraschallbereich, bei denen sich die Frequenz nicht proportional zur Zeit verändert, eine leichtere Bestimmung der Relativgeschwindigkeit durch die Auswertung der Intrapulsinformationen erreicht werden kann.

Aus dem Dokument DE 10 2008 054 789 A1 ist es bekannt, einen aus der Laufzeit eines an einem Objekt reflektierten Signals resultierenden Verlust der Signalintensität des Echosignals dadurch zu kompensieren, dass das Echosignal mit einer von seiner Laufzeit abhängigen Verstärkung verstärkt wird. So können auch schwache Echosignale genau ausgewertet werden.

Aus dem Dokument EP 2 144 069 A2 ist es bekannt, eine Geschwindigkeit eines Objektes direkt aus einem eine charakteristische Signalstückfolge aufweisenden Pulsmuster eines mittels eines an dem Objekt reflektierten Pulses zu bestimmen.

Weiterhin ist aus dem Dokument DE 10 2008 044 351 A1 bekannt, eine Verbesserung der Funktion eines Ultraschallsensors dadurch zu erreichen, dass zumindest der von dem Ultraschallsensor umfassten Elektro-Akustik-Wandler durch mindestens eine Schirmfläche gegen elektromagnetische Strahlung abgeschirmt wird und dass eine besonders effiziente Signalverarbeitung durch Zusammenführen der Echoinformationen aller Sensoren, die einen Teil des Umfeldes des Bewegungshilfsmittels abdecken, in eine vorwiegend für diesen Teil des Umfeldes zuständige Verarbeitungseinheit möglich ist.

Ferner ist aus dem Dokument DE 44 10 895 A1 ein Ultraschallsensor bekannt, der in einer Aussparung eines Fahrzeugaußenteil eingebaut und mittels einer Abdeckvorrichtung verdeckt ist. Dadurch wird der Ultraschallsensor vor äußeren Einflüssen, insbesondere vor Diebstahl und Beschädigungen, wirksam geschützt.

Ferner ist aus dem Dokument DE 102010031573 eine Anordnung bekannt, bei der der akustische Sensor, dort speziell der Ultraschallsensor, in einer Ausnehmung oder einem nach außen offenen Holraum vorgesehen ist, wobei die Ausnehmung oder der nach außen offene Holraum durch mindestens ein Fahrzeugverkleidungselement gebildet wird, dessen Außenseite nicht zur Aufnahme des Ultraschallsensorelements unterbrochen ist.

Ferner ist aus Dokument DE 10 2010 027780 eine Anordnung bekannt bei der der akustische Sensor, dort speziell der Ultraschallsensor, eine Membran enthält, welche mindestens zwei Teilbereiche zum Aussenden und/oder Empfangen von Ultraschallsignalen aufweist, wobei die beiden Teilbereiche unterschiedliche Resonanzeigenschaften aufweisen, und mindestens einem mit der Membran gekoppelten elektromechanischen Wandler, an den ein Steuersignal mit mindestens zwei unterschiedlichen Steuersignalfrequenzen anlegbar ist, wobei eine erste Steuersignalfrequenz im Bereich einer Resonanzfrequenz eines ersten Teilbereichs der Membran liegt und eine zweite Steuersignalfrequenz im Bereich einer Resonanzfrequenz eines zweiten Teilbereichs der Membran liegt.

In WO-2011009786 A1 wird ein Verfahren der ortenden Fahrzeug-Fahrzeug-Kommunikation beschrieben, dessen Kern darin besteht, dass die räumliche Beziehung eines mit mindestens zwei räumlich getrennten akustischen Empfängern ausgestatteter Beobachters zu einer Schallquelle ebenso anhand der Laufzeitunterschiede der akustischen Signale zueinander erkannt werden kann, wie die räumliche Beziehung eines Empfängers zu einem mit mindestens zwei räumlich getrennten Schallquellen ausgestatteten Sender, insbesondere wenn dem Empfänger der Abstand der räumlich getrennten Schallquellen bekannt ist.

In DE 3806847 A1 wird eine Abstandsmesseinrichtung zur berührungslosen Abstandsmessung beschrieben, bei der Ultraschallsignale mit unterschiedlicher Frequenz ausgesendet werden, so dass die entsprechenden zurückkehrenden Echosignale aufgrund deren Frequenz jeweils einem zugehörigen ausgesendeten Ultraschallsignal zugeordnet werden können und somit die Messfrequenz der Abstandsmessung erhöht werden kann.

In US 6 690 616 B1 werden ein Verfahren und eine Vorrichtung zum Detektieren von Objekten und insbesondere eine Einparkhilfe-Assistenz-Vorrichtung beschrieben, wobei ein Sendesignal mit einer zeitlich unveränderlichen Kennung ausgesendet wird und entsprechende Empfangssignale empfangen werden, die daraufhin untersucht werden, ob diese die ausgesendete Kennung enthalten. Falls sich in den Empfangssignalen die zeitlich unveränderliche Kennung wiederfindet, werden die Empfangssignale weiter ausgewertet, und ansonsten verworfen.

Heutige Umfeldsensoriksysteme müssen in zunehmendem Maße sicherheitskritische Funktionen, wie Beschleunigen, Bremsen, Lenken, Auslösen bzw. Parametrieren verschiedener Aktoren ausführen, bei denen sichergestellt ist, dass die detektierten Umfeldinformationen zuverlässig sind.

Aufgabe der Erfindung ist es daher, Mittel bereitzustellen, mit denen die Reichweite und/oder die Robustheit gegenüber Störsignalen gegenüber den im Stand der Technik verwendeten Systemen erhöht werden kann.

Offenbarung der Erfindung

Erfindungsgemäß werden ein Verfahren und eine Einrichtung zum Informationsaustausch mit der Umgebung von Bewegungshilfsmitteln und/oder zur akustischen Erfassung des Umfeldes eines Bewegungshilfsmittels durch Bestimmung der Position und/oder der Bewegung von Objekten in der Umgebung eines Bewegungshilfsmittels mittels pulsförmig ausgesendeter Schallsignale gemäß den unabhängigen Patentansprüchen 1 und 14 geschaffen.

Bei dem erfindungsgemäßen Verfahren wird eine Schallaussendung, die Impulse voneinander unterschiedli-cher Mittenfrequenz $f_{ci}$ aufweist, auf eine Weise durchgeführt, dass ein für die pulsförmigen Schallsignale verwendeter Frequenzbereich in jeweils eine der verwendeten Mittenfrequenzen $f_{ci}$ aufweisende Frequenzbänder aufgeteilt wird. Dabei haben die Mittenfrequenzen benachbarter Bänder $f_{ci}$, $f_{ci+1}$ erfindungsgemäß einen vorbestimmten Mindestabstand voneinander. Die Impulse voneinander unterschiedlicher Mittenfrequenz $f_{ci}$ werden zumindest zeitweise gleichzeitig ausgesendet. Der vorbestimmte Mindestabstand für die auf die Mittenfrequenzen benachbarter Bänder $f_{ci}$, $f_{ci+1}$ gleichzeitig ausgesendeten und eine Impulsdauer $T_P$ aufweisenden Impulse genügt der Bedingung

$$\left| f_{c\,i+1} - f_{c\,i} \right| > \frac{10}{T_P}.$$

Ferner weisen die Impulse jeweils ein eine charakteristische Signalstückfolge aufweisendes Pulsmuster innerhalb der Pulsdauer auf. Alternativ oder zusätzlich stehen die verwendeten Mittenfrequenzen in einem ganzzahligen Frequenzverhältnis zueinander.

Außerdem wird ein Bewegungshilfsmittel, dass die erfindungsgemäße Einrichtung aufweist, offenbart.

Bevorzugte Weiterbildungen der Erfindung ergeben sich aus den abhängigen Ansprüchen.

$$\left| \frac{f_{c\,i+1}}{f_{c\,i}} - 1 \right| > 0,2$$

Der Mindestabstand kann größer als 20% sein, d.h. er kann sich gemäß $\left| \frac{f_{c\,i+1}}{f_{c\,i}} - 1 \right| > 0,2$ berechnen.

Denn erfindungsgemäß wurde erkannt, dass sich die Übertragungseigenschaften akustischer Signale in unterschiedlichen Frequenzbereichen deutlich unterscheiden können, sowohl bezüglich der Signaldämpfung, als auch bezüglich der dort vorherrschenden Reflexionseigenschaften oder der dort vorherrschenden Störsignale.

Ferner können gemäß einer bevorzugten Ausführungsform, bei der die Impulse voneinander unterschiedlicher Mittenfrequenz $f_{ci}$ zumindest zeitweise gleichzeitig und/oder unmittelbar hintereinander folgend ausgesendet werden, vorteilhaft insbesondere durch gleichzeitige oder zumindest quasigleichzeitige Nutzung voneinander deutlich verschiedener Frequenzbänder die Vorzüge aller Frequenzbänder kombiniert werden und die daraus resultierenden Empfangssignale lassen sich verhältnismäßig leicht auswerten, insbesondere wenn die gleichzeitigen oder quasigleichzeitigen Aussendungen auf dem Bewegungshilfsmittel räumlich verteilt stattfinden und/oder wenn sich die ausgesandten akustischen Signalformen durch weitere Merkmale zusätzliche voneinander unterschieden wie beispielsweise durch die Sendepulsdauern, die Signalfrequenz und/oder den Verläufen der Signalfrequenzen innerhalb der Pulse.

Das System kann sich ferner dadurch auszeichnen, dass in manchen der verwendeten Frequenzbänder vom Bewegungshilfsmittel aus keine Aussendung stattfindet und/oder dass manche Wandler nicht zum Aussenden sondern nur zum Empfangen von akustischen Signalen verwendet werden.

Die auf diese Weise erreichten Raum-Zeit-Frequenz-Diversifizierungen ermöglichen die preiswerte Realisierung von Sensoren hoher Zuverlässigkeit.

Insbesondere wird bei dem erfindungsgemäßen Verfahren zumindest ein Schallimpuls, der Frequenzen unterhalb des Ultraschall-Frequenzbereichs aufweist, empfangen und verwendet.

Somit werden erfindungsgemäß akustischen Ortungen mittels von pulsförmigen akustischen Signalen im Ultraschallbereich und darunter, insbesondere im Hörbereich des Menschen mit einer Frequenz von f < 20 kHz durchgeführt, wobei bei der erfindungsgemäßen akustischen Ortung auf die Verwendung von pulsförmigen Signalen im Ultraschallbereich auch vollständig verzichtet werden kann.

Damit ist im Prinzip auch keine nennenswerte Einbuße bei der Ortsauflösung mittels der heute genutzten Funktionen verbunden, da die Wellenlänge λ von akustischen Signalen im Hörbereich des Menschen, die eine Frequenz von unter 20 kHz aufweisen, größer als 1,7 cm ist.

Ein der Erfindung zugrundeliegender Gedanke ist, das gesamte akustische Spektrum und insbesondere auch und die Vorzüge der Spektralbereiche jeweils optimal zu nutzen.

Die Entscheidung für Ultraschall-Messimpulse stammt aus einer Zeit, in der man gerade mal in der Lage war, mit einigen damals aufkommenden elektronischen Bauelementen in einem schmalen Frequenzbereich elektrische Signale höherer Frequenz, d.h. Ultraschall aufzunehmen und mit vertretbaren Kosten analog zu verarbeiten. In den darauf folgenden 30 Jahren entwickelte sich die Technik weiter und so ist man heutzutage schon in der Lage, breitbandige akustische Signale mit einem weitaus höheren Dynamik von 14 ... 16 Bit und mehr mittels preiswerten Analog-Digitalwandlern, wie z.B. Sigma-Delta-Wandlern insbesondere im Signalfrequenzbereich bis 20 kHz (,d.h., insbesondere auch unterhalb des Ultraschallbandes) in Digitalformate zu wandeln und dort mit mittlerweile preiswert herstellbarer Signalverarbeitungstechnik zu filtern und anderweitig zu verarbeiten.

Erfindungsgemäß wird für eine Umfelddetektion eines Bewegungshilfsmittels ausgenutzt, dass dank der heutzutage mit relativ geringem Aufwand realisierbaren hohen Wandlerdynamik sowie dank mit Digitaltechnik realisierbaren schmalbandigen Filterung auch der Hörbereich des Menschen für akustische Umfelddetektion trotz des dort im Allgemeinen vorherrschenden höheren Störpegels nutzbar gemacht werden kann, zumal breitbandige Mikrofone und Schallerzeuger, wie Lautsprecher, insbesondere Hochtöner, neben den heutzutage verwendeten piezoelektrischen Ultraschall-Wandlern kostengünstig verfügbar sind.

Insbesondere bei der für die akustische Umfelderfassung üblichen Laufzeitmessung treten Echosignale mit sehr kleinen Signalstärken auf. Um Störungen dieser (Echo-)Empfangssignale durch eigene Aussendungen zu vermeiden, dürfen keine dem (Echo-)Empfangssignalen bezüglich des Zeitverlaufs der Signalstärke und des Frequenzverlaufs ähnlichen Aussendungen während des Empfangs der (Echo-)Empfangssignale stattfinden.

Dies wird erfindungsgemäß dadurch erreicht, dass die eigenen Aussendungen bevorzugt derart pulsförmig moduliert sind, dass während des Echoempfangs keine Aussendungen im gleichen Frequenzbereich stattfinden.

Alternativ können die Aussendungen unter Nutzung deutlich voneinander unterschiedlicher Frequenzbänder derart frequenzmoduliert gestaltet sein, dass sich Aussendungen anhand ihrer Frequenz deutlich von denen im gleichen Moment auszuwertenden (Echo-)Empfangssignalen unterscheiden.

Die Vermeidung von Störungen des eigenen Empfangs durch eigene Aussendungen soll jedoch nicht nur bei der Ortung anhand von Laufzeitmessungen der vom Bewegungshilfsmittel ausgesandten Signale sondern auch beim Empfang von Signalen anderer Verkehrsteilnehmer sowie von Signalen aus dem Umfeld des Bewegungshilfsmittels, wie z.B. von baulichen Hindernissen oder zur Verkehrsleitung verwendete Signale erzielt werden.

Gemäß einer anderen vorteilhaften Weiterbildung der Erfindung werden Schallsignale zumindest teilweise in Pulsen voneinander deutlich unterschiedlicher Mittenfrequenz $f_{ci}$ ausgesendet, wobei ein für die pulsförmigen Schallsignale verwendeter Frequenzbereich in die Mittenfrequenzen $f_{ci}$ aufweisende Frequenzbänder aufgeteilt wird. Um eine zuverlässige Trennung der auf benachbarten Mittenfrequenzen $f_{ci}$, $f_{ci+1}$ ausgesandten Pulse einer Pulsdauer $T_P$ trotz des Einflusses von Dopplerverschiebung und/oder Überlagerung laufzeitmäßig naheliegender Echos zu ermöglichen sollte bei zumindest quasigleichzeitiger Nutzung der Frequenzbänder der Frequenzabstand mindestens der Bedingung

$$\left| f_{c\,i+1} - f_{c\,i} \right| > \frac{10}{T_P}$$ genügen.

Dies ermöglicht vorteilhaft, dass Sendesignal so zu gestalteten, dass eine aufwandsarme Signalauswertung möglich ist. Beispielsweise kann eine m-äre-Modulation durchgeführt werden. Eine m-äre-Modulation bedeutet insbesondere, dass zumindest zeitweise gleichzeitig oder zumindest quasigleichzeitig in mehreren Signalbändern gesendet wird. Dabei sind die Aussendungen so gestaltet, dass sie auch im Falle von durch Relativbewegungen hervorgerufenen Dopplerverschiebung mit an die Signale angepasste Filter (engl. Matched Filter) voneinander deutlich separiert werden können. Signalveränderungen der Echos durch laufzeitmäßig eng benachbarte Reflexe dürfen nicht zur Verfälschung der Signale führen.

Ferner kann bei einer Ausführungsform der Erfindung durch die oben erwähnte zumindest quasigleichzeitige Aussendung in verschiedenen Frequenzbändern von ein und dem gleichen Schallabstrahler, der heutzutage zumeist als Elektro-Akustik-Wandler realisiert ist, durchgeführt werden, wie auch durch unterschiedliche Einrichtungen an dem gleichen Verbauort als auch durch Einrichtungen, die an dem Bewegungshilfsmittel oder/und in der Umgebung des Bewegungshilfsmittels verteilt angeordnet und in ihrer Aussendung miteinander synchronisiert sind.

Ferner wird kann die erfindungsgemäße Aufteilung in Frequenzbänder mit beabstandeten Mittenfrequenzen vorteilhaft bei bekannten Puls- und Frequenzmodulationstechniken angewendet, wie sie beispielsweise in der EP2144069A2, in der EP 2 251 710 A2, in der EP 2 312 333 A1, und/oder in der WO-2010063510 A1 beschrieben werden, insbesondere auch bei Kombinationen von Puls- und Frequenzmodulationsverfahren in den hier beschriebenen erfindungsgemäßen Frequenzbändern. So kann insbesondere durch Anwendung der Erfindung in Verbindung mit dem in WO-2010063510 A1 beschriebenen Frequenzmodulationsverfahren, insbesondere wenn auf Frequenzbänder mit Mittenfrequenzen $f_{ci}$ < 20 kHz verwendet werden, erreicht werden, dass sich die Frequenz eigener Aussendungen deutlich von der Frequenz der im gleichen Moment zu empfangenden Echosignale unterscheidet.

Eine weitere Möglichkeit, die Merkmale unterschiedlicher Frequenzbänder für die akustische Umfeldüberwachung zu nutzen, besteht darin, Pulse gegeneinander zeitlich versetzt in den deutlich zueinander unterschiedlichen Frequenzbändern auszusenden, wobei bevorzugt Unterschiede zwischen den Pulsen, wie die zeitliche Anordnung der Pulse untereinander, die Pulsdauern und/oder Frequenzverläufe bzw. -lagen der Pulse zur Störunterdrückung, Kollisionserkennung und/oder Informationsübertragung verwendet wird. Dabei stellt im Fall der Informationsübertragung jede Anordnung von Pulsen eine Signalform und die Summe aller möglichen Anordnungen einen Satz möglicher Signalformen dar.

Dies hat beispielsweise gegenüber dem in WO-2011009786 A1 beschriebenen Verfahren den Vorteil, dass insbesondere durch die Nutzung von Signalfrequenzen unterhalb von 20 kHz ist aufgrund der geringeren Dämpfung eine deutlich höhere Reichweite von über 100 m erzielbar ist. Insbesondere können dabei durch die Auswertung der durch die Signalübertragung auftretenden Signalveränderungen, wie Dopplerverschiebung, Laufzeitänderung und/oder Signaldämpfung wie auch durch die Auswertung von Unterschieden zwischen den aus einem Satz möglicher Signalformen ausgewählten und tatsächlich gesendeten Signalformen weitere Informationen zwischen einem Bewegungshilfsmittel und dessen Umgebung ausgetauscht werden.

Gemäß einer bevorzugten Weiterbildung der Erfindung wird das Verfahren nach derart angewandt, dass räumliche Beziehung eines mit mindestens zwei räumlich getrennten akustischen Empfängern ausgestatteten Beobachters zu einer Schallquelle und/oder die räumliche Beziehung eines Empfängers zu einem mit mindestens zwei räumlich getrennten Schallquellen ausgestatteten Senders anhand der Laufzeitunterschiede der ausgesandten akustischen Signale zueinander ermittelt wird. Gemäß einer Variante dieser Ausführungsform werden dabei bevorzugt Signalfrequenzen unterhalb von 20 kHz verwendet.

Gemäß noch einer Weiterbildung der Erfindung, welche insbesondere mit der vorhergehenden bevorzugten Weiterbildung kombiniert werden kann, werden zusätzlich durch die Auswertung der durch die Signalübertragung auftretenden Signalveränderungen, wie Dopplerverschiebung, Laufzeitänderung und/oder Signaldämpfung wie auch durch die Auswertung von Unterschieden zwischen den aus einem Satz möglicher Signalformen ausgewählten und tatsächlich gesendeten Signalformen weitere Informationen zwischen einem Bewegungshilfsmittel und dessen Umgebung ausgetauscht.

Da bei der vorteilhaften Weiterbildung das Schallspektrum in mehrere Frequenzbänder aufgeteilt ist, kann der Aufwand beim Herausfiltern weiter verringert werden. Dadurch wird der erforderliche Dynamikbereich einer technisch realisierbaren Signalverarbeitung verringert und/oder kann besser ausgenutzt werden, was auch eine Kostenersparnis bedeutet.

Insbesondere wird dadurch vorteilhaft ermöglicht, dass die Oberwellen der niederfrequenten akustischen Signale entweder als hochfrequente Trägersignale genutzt werden oder können abseits der hochfrequenten Trägersignale liegen.

Die erfindungsgemäßen unterschiedlichen verwendeten Mittenfrequenzen werden derart gewählt, dass sie in einem ganzzahligen Frequenzverhältnis zueinander stehen. Genauer gesagt verhalten sich die Mittenfrequenzen $f_{ci}$

$$\frac{n}{m} = 2;\ 4;\ 6;\ 8;\ ...$$

zueinander wie $n \cdot f_{ci} = m \cdot f_{cj}$ mit $i \neq j$ derart, dass $n,\ m \in N$, bevorzugt ist.

Dadurch, dass das Verhältnis der genutzten Frequenzbänder zueinander ganzzahlig ist, wird eine leichtere Signalgenerierung und Signalfilterung gewährleistet, da die Oberwellen der niederfrequenten Bänder nicht in die höherfrequenten Bänder fallen.

Bei einer Ausführungsform der Erfindung werden, wie bereits erwähnt, Pulse voneinander unterschiedlicher Mittenfrequenz $f_{ci}$ zumindest zeitweise gleichzeitig und/oder unmittelbar hintereinander folgend ausgesendet.

Bevorzugt unterbrechen dabei Sendepausen die aus Pulsen unterschiedlicher Mittenfrequenz $f_{ci}$ zusammengesetzte Signalaussendung, um die Anforderungen an die Signaldynamik der Auswertetechnik weiter zu reduzieren.

Gemäß einer anderen bevorzugten Weiterbildung der Erfindung werden die pulsförmigen Schallsignale derart ausgesendet, dass sich die bei ein und derselben Mittenfrequenz $f_{ci}$ verwendeten Pulsdauern zwischen verschieden Übertragungszyklen voneinander unterscheiden.

Gemäß noch einer anderen Weiterbildung haben die innerhalb eines Zeitbereichs in der Größenordnung eines Übertragungszyklus auf voneinander unterschiedlichen Mittenfrequenzen $f_{ci}$ ausgesendeten Schallimpulse voneinander unterschiedliche Impulsdauern.

Gemäß noch einer anderen Weiterbildung werden innerhalb eines Zeitbereichs in der Größenordnung eines Übertragungszyklus Schallimpulse mit voneinander deutlich unterschiedlichen Mittenfrequenzen $f_{ci}$ ausgesendet. die zu jeweils unterschiedlichen Zeitpunkten beginnen und/oder die zu jeweils voneinander unterschiedlichen Zeitpunkten enden.

Ferner können bei dem Verfahren bei Signalbestandteilen niedrigerer Mittenfrequenz $f_{ci}$ bevorzugt Pulse längerer Dauer verwendet werden und/oder seltener Pulse gesendet werden als bei den Signalbestandteilen mit höheren Mittenfrequenzen $f_{ci}$ und/oder dass die Signalstärke der auf unterschiedlichen Mittenfrequenzen $f_{ci}$ generierten Sendesignalbestandteile können unterschiedliche Signalstärken aufweisen.

Erfindungsgemäß wird somit unter anderem auf vorteilhafte Weise ausgenutzt, dass die Dopplerauflösung von der Pulsdauer beziehungsweise von der äquivalenten Verweildauer bei einer Trägerfrequenz abhängig ist.

Bei dem erfindungsgemäßen Verfahren wird die Tatsache ausgenutzt, dass mittels von kurzen Pulsen mit hohen Frequenzen eine zwar geringe Dopplerauflösung bei den für die hohen Frequenzbänder üblichen, relativ geringen Reichweiten aber eine hohe Ortsauflösung erreicht wird, und umgekehrt. Dies gilt insbesondere, wenn die Pulsdauer von Pulsen in bei niedrigen Signalfrequenzen überproportional mit der Abnahme der Signalfrequenz zunimmt.

Anders ausgedrückt, die niedrige Raumdämpfung von akustischen Signalen mit niedrigen Frequenzen wird bevorzugt zur Erzielung hoher Reichweiten ausgenutzt. Lange Pulse gestatten eine gute Dopplerauflösung, sodass die Signale in den niederfrequenten Bereichen eher der groben Entfernungsschätzung mit einer sehr guten Geschwindigkeitsbestimmung und sogar einer sehr guten Beschleunigungsbestimmung dienen, während die Signale in den höheren Frequenzbändern mit kurzen Pulsen vorwiegend der Ortsbestimmung dienen.

Ferner kann erfindungsgemäß die bei einer Mittenfrequenz $f_{ci}$ generierte Signalfrequenz im Bereich der Mittenfrequenz vorwiegend in einem Frequenzband von bis zu $\pm 1{,}5/$ Tpi schwanken, wobei Tpi die in diesem Übertragungszyklus bei der Mittenfrequenz verwendete Pulsdauer ist. Damit wird einerseits eine deutliche Verringerung der Breite des oberen Bereichs der Autokorrelationsfunktion des Sendepulses erreicht und andererseits wird in stationären Objektszenen vermieden, dass die Auslöschbedingung erfüllt ist.

Erfindungsgemäß werden bei gemäß somit bestimmte Signalformen aus einem Satz möglicher Signalformen ausgesandt.

Dabei wird gemäß einer Weiterbildung ein akustischer Puls gesendet, der ein Signalstück mit einer festen Frequenz innerhalb der Pulsdauer und/oder ein Signalstück mit einer zeitabhängigen Frequenz, insbesondere einen Chirp, innerhalb der Pulsdauer. Erfindungsgemäß wird ferner ein akustischer Puls gesendet, der ein eine charakteristische Signalstückfolge aufweisendes Pulsmuster innerhalb der Pulsdauer aufweist. Als Pulsmuster eignet sich bevorzugt ein Puls mit einer schmalen Autokorrelationsfunktion wie beispielsweise ein Barker-Code, wahlweise realisiert als Amplitudenmodulation oder als Frequenzmodulation bei einer Mittenfrequenz $f_{ci}$ oder über mehrere durch unterschiedliche Mittenfrequenzen $f_{ci}$, $f_{cj}$ mit $i \neq j$ charakterisierte Bänder.

Somit können vorteilhaft, je nach Störsituation und/oder Objektszensensituation, Sendepulse mit einer festen Frequenz innerhalb der Pulsdauer und/oder Sendepulse mit zeitveränderlicher Frequenz innerhalb der Pulsdauer, insbesondere Chirps, ausgesendet werden.

Wegen der einfachen Realisierung werden dabei Sendepulse mit einer festen Frequenz innerhalb der Pulsdauer besonders bevorzugt.

Besonders bevorzugt wird erfindungsgemäß die Verwendung von akustischen Sendepulsen mit einer Frequenzmodulation innerhalb der Pulsdauer, d.h. ein ununterbrochenes Senden während der Pulsdauer mittels eines Elektro-Akustik-Wandlers in Kombination mit unterschiedlichen Verweildauern bei unterschiedlichen Frequenzen und/oder die Verwendung einer Frequenzmodulation der Sendepulse zur Separation der von räumlich getrennten Elektro-Akustik-Wandlern gleichzeitig ausgesendeten Sendepulse.

Durch die Aussendung von linearen Chirps, insbesondere im Hörbereich des Menschen, wird eine verbesserte Ortsauflösung erreicht, da die Autokorrelationsfunktion solcher Pulse in ihrem oberen Bereich besonders schmal ist. Durch die Aussendung von nicht linearen Chirps, insbesondere im Hörbereich des Menschen, wird der Aufwand zur Bestimmung der Relativgeschwindigkeit durch die Auswertung der Intrapulsinformationen verringert.

Als ein Vorteil der Erfindung kann hierbei durch die Verwendung von akustischen Sendepulsen insbesondere im Hörbereich des Menschen, die jeweils ein eine charakteristische Signalstückfolge aufweisendes Pulsmuster innerhalb der Periodendauer aufweisen, die Geschwindigkeit eines Objektes direkt aus der Signalstückfolge bestimmt werden. Hierfür bedarf es keinerlei Annahmen über die Umgebungsart, die Anzahl und Position der Objekte, usw., die die Verlässlichkeit der Geschwindigkeitsbestimmung reduzieren könnten.

Eine weitere vorteilhafte Weiterbildung der Erfindung besteht darin, dass mindestens ein Schallsignal in einem ausgewählten Frequenzband gesendet wird, in welchem vor dem Senden des Schallsignals eine einen vordefinierten Störsignaldichtenschwellenwert unterschreitenden Störsignaldichte vorherrschte. Es kann erfindungsgemäß auch mindestens ein akustisches Signal mit einer solchen ausgewählten Signalform gesendet werden, dass die ausgewählte Signalform sich von den Signalformen der vor dem Senden des eigenen akustischen Signals vorherrschenden akustischen Signalen jeweils unterscheidet. Die Mittenfrequenz kann abhängig von der Störsituation variiert werden, falls in der bisher verwendeten Position relativ hohe Störungen auftritt.

Mit anderen Worten, es werden die Sendesignale bei dem erfindungsgemäßen Verfahren insbesondere derartig ausgewählt, dass sie sich in Spektralbereichen befinden, in denen vor der Aussendung nur wenig Störung vorherrschte. Optional werden die Sendesignale derart an das vor dem eigenen Senden vorherrschende Signalspektrum angepasst, dass die im eigenen Signal verwendeten Sendeformen sich deutlich von den vor dem eigenen Senden vorherrschenden Signalformen unterscheiden. Dabei kennzeichnen sich die innerhalb der eigenen Sendesignale ausgewählten Signalformen insbesondere anhand der ausgewählten Frequenzverläufe (feste Frequenz, lineare und nicht lineare Chirps, Frequency Hopping, usw.) während des Sendens, anhand der Fensterform der Sendepulse (rechteckige, dreieckige, gaußförmige Fenster, usw.), der Pulsdauer, der Folge der Pulsdauer sowie der dazugehörigen Pausenzeiten zwischen den Pulsen.

Die Erfindung kann vorteilhaft dazu verwendet werden, um anhand der aus der Fahrzeugumgebung aufgenommenen akustischen Signale Informationen/Warnungen beispielsweise für den Bediener des Fahrzeugs über Situationen im Fahrzeugumfeld zu generieren. Auch kann das Fahrzeug in seiner Fahrbewegung z.B. durch Lenkung, Beschleunigung und/oder Bremsen beeinflusst werden bzw. Vorrichtungen zur Schadensvermeidung bzw. Reduktion der Unfallschwere, wie z.B. Gurtstraffer, Fensterheber, aufstellbare Kopfstützen, Airbags usw. können parametriert bzw. aktiviert werden.

Ferner kann gemäß noch einer Weiterbildung des erfindungsgemäßen Verfahrens die Erfindung auch für eine Realisierung einer Kommunikation zwischen mehreren Bewegungshilfsmitteln verwendet werden, insbesondere für eine ortende Fahrzeug-Fahrzeug-Kommunikation, bei der anhand der akustischen Aussendungen anderer Bewegungshilfsmittel durch Auswertung von Signalmerkmalen wie Laufzeitunterschieden, Signalstärke- und/oder Signalfrequenzänderungen die eigene räumliche Beziehung und/oder die anderer Verkehrsteilnehmer in Bezug auf das Umfeld ausgewertet werden und bei der optional zusätzlich die daraufhin erfolgenden Aussendungen Informationen über das im Bewegungshilfsmittel erfasste Umfeld enthalten.

Dazu kann beispielsweise eine Ausführungsform der Erfindung verwendet werden, bei der von anderen Bewegungshilfsmitteln, insbesondere Fahrzeugen, bzw. von Einrichtungen in der Fahrzeugumgebung des Bewegungshilfsmittels ausgesandte Schallsignale, die durch mehrere Mittenfrequenzen gekennzeichnet sind, aufgenommen und ausgewertet werden. Außerdem können zur Auswertung der Schallsignale Informationen aus von dem Bewegungshilfsmittel aufgenommenen Schallsignalen verwendet werden, die durch mehrere Mittenfrequenzen gekennzeichnet sind und von der Umgebung zum Bewegungshilfsmittel hin ausgesandt wurden.

Gemäß einer Ausführungsform der Erfindung werden insbesondere die im Hörbereich ausgesendeten Schallsignale zur akustischen Kennzeichnung des insbesondere leisen Bewegungshilfsmittels, wie elektrisch angetriebene Fahrzeuge, mit benutzt. So werden dank der akustischen Kennzeichnung nicht nur andere Verkehrsteilnehmer, insbesondere Fußgänger, über das Vorhandensein von leisen Bewegungshilfsmitteln informiert, sondern durch erfindungsgemäße gezielte signaltechnische Auswertung dieser akustischen Kennzeichnung bezüglich Laufzeitunterschiede, Signalstärke und Dopplerverschiebungen findet auch eine detaillierte Bestimmung des räumlichen Verhaltens dieser Bewegungshilfsmittel statt. Ferner kann die Signalform und/oder der Signalstärkenverlauf und/oder zumindest eine Signalstückfolge und/oder der Frequenzverlauf und/oder das Frequenzband eines gesendeten Signals zur akustischen Kennzeichnung des Bewegungshilfsmittels in Abhängigkeit von einer berechneten Wahrscheinlichkeit einer Kollision mit dem mindestens einem Objekt, insbesondere einem zweiten Bewegungshilfsmittel, ausgewählt werden.

Mit anderen Worten, es werden zur Bestimmung der Objektszene die ausgesandten akustischen, Frequenzen im Hörbereich des Menschen aufweisenden Signale zur akustischen Kennzeichnung von Fahrzeugen, insbesondere von leisen Fahrzeugen, mitbenutzt. Insbesondere wird die akustische Kennzeichnung des eigenen Fahrzeuges derart gestaltet, dass in nicht gefährlichen Situationen, wie beispielsweise wenn keine Kollision des eigenen Fahrzeuges mit einem anderen Verkehrsteilnehmer droht, eher niederfrequente und/oder sich langsam verändernde Signale ausgesandt werden, während mit zunehmendem Risiko einer Kollision eher hochfrequente, sich häufig ändernde Signale im Hörbereich des Menschen ausgesandt werden, wodurch die umgebenden Verkehrsteilnehmer besonders gewarnt werden.

Erfindungsgemäß kann weiter zur Auswertung der Schallsignale eine Messfolge bezüglich eines Zeitverlaufes einer Periodendauer, insbesondere eines Zeitverlaufes der Echolaufzeiten, bestimmt werden. Dabei weist die Messfolge Signalstücke mit einer einen Signalintensitätsschwellenwert überschreitenden Signalintensität auf und wird mit mindestens einer Referenzfolge verglichen, und es wird eine Vergleichsinformation bezüglich einer Abweichung der Messfolge von der Referenzfolge bestimmt wird, und zumindest eine Teilfolge der Vergleichsinformation zur Bestimmung einer Information wird bezüglich des eines der gesendeten Schallsignale und zur Bestimmung der Position und/oder der Bewegung des ersten Objektes und/oder zur Bestimmung der Position und/oder der Bewegung mindestens eines Formmerkmals mindestens eines zweiten, reflektierenden Objektes, das sich zwischen dem eigenen Fahrzeug und dem ersten Objekt befindet, berücksichtigt.

Somit können besonders vorteilhaft bevorzugt akustische Wechselsignale verwendet werden, die sich somit als Periodendauerfolge mit zeitveränderlicher Signalstärke beschreiben lassen. Eine Messfolge von Periodendauern eines empfangenen akustischen Signals ist, ähnlich einem Fingerabdruck, jeweils ein Charakteristikum sowohl für den ausgesandten Sendepuls als auch für den Übertragungsweg zu der Empfangseinrichtung, wobei der Übertragungsweg beispielsweise durch die Richtcharakteristik der aussendenden und/oder der empfangenden Antennen, durch die Objekte, an denen die ausgesandten akustischen Signale auf ihrem Weg zu der Empfangseinrichtung reflektiert werden, und durch die Relativbewegung dieser Objekte zueinander bestimmt ist. Kennt die Auswerteeinrichtung den für ein Übertragungsszenarium charakteristischen Fingerabdruck, der vorzugsweise durch eine Folge von Referenzperiodendauern repräsentiert wird, so kann empfängerseitig detektiert werden, welches Szenario bei einem empfangenen akustischen Signal vorlag.

Bei einer Weiterbildung der erfindungsgemäßen Einrichtung ist mindestens ein Schallsensor der Einrichtung ein geschirmter Sensor, der eine Schirmfläche zum Abschirmen einer schallschwingungserzeugenden Komponente des Sensors gegen elektromagnetische Strahlung aufweist.

Dadurch wird vorteilhaft eine Minimierung von störenden Einflüssen der elektromagnetischen Strahlung auf die gegenüber der elektromagnetischen Strahlung empfindlichen Komponenten der akustischen Einrichtung und daher eine Verbesserung der Funktionsweise einer solchen akustischen Einrichtung erreicht.

Gemäß einer weiteren Ausführungsform der Erfindung wird ferner ein aus dem empfangenen akustischen Signal erzeugtes elektrisches Signal vor einer Auswertung zur Bestimmung der Position und/oder der Bewegung des ersten Objektes mit einer von der Laufzeit des empfangenen akustischen Signals abhängigen Verstärkung verstärkt.

Bei dieser Ausführungsform können auch schwache Echosignale bei einer Umfelderfassung optimal ausgewertet werden.

Die erfindungsgemäße Einrichtung kann derart ausgestaltet sein und ein System aus unterschiedlichen Sender- und Empfängermodulen aufweisen, dass zum Senden und/oder zum Empfangen von akustischen Signalen die gleichen oder unterschiedliche Bauteile verwendet werden. Beispielsweise werden ein Ultraschall-Elektro-Akustik-Wandler, eine Sirene zur Erzeugung der akustischen Signale im Hörbereich des Menschen und räumlich getrennt davon Mikrofone mit beliebigem Aufbau zum Empfang von zumindest einem Teil der akustischen Signale verwendet. Somit können damit separierte Frequenzbänder der Schallauswertung leichter an die Objekt- und Störsituation angepasst werden.

Gemäß einer Ausführungsform der Erfindung weist die Einrichtung einen akustischen Sensor auf, der eine Membran enthält, welche mindestens zwei Teilbereiche zum Aussenden und/oder Empfangen von Ultraschallsignalen aufweist, wobei die beiden Teilbereiche unterschiedliche Resonanzeigenschaften aufweisen, und mindestens einem mit der Membran gekoppelten elektromechanischen Wandler, an den ein Steuersignal mit mindestens zwei unterschiedlichen Steuersignalfrequenzen anlegbar ist, wobei eine erste Steuersignalfrequenz im Bereich einer Resonanzfrequenz eines ersten Teilbereichs der Membran liegt und eine zweite Steuersignalfrequenz im Bereich einer Resonanzfrequenz eines zweiten Teilbereichs der Membran liegt.

Das erfindungsgemäße Bewegungshilfsmittel, insbesondere ein Fahrzeug, kann dazu eingerichtet sein, dass ein akustischer Sensor oder Ultraschallsensor in einer Ausnehmung oder einem nach außen offenen Hohlraum vorgesehen ist, wobei die Ausnehmung oder der nach außen offene Hohlraum durch mindestens ein Fahrzeugverkleidungselement gebildet wird, dessen Außenseite nicht zur Aufnahme des Ultraschallsensorelements unterbrochen ist.

Die erfindungsgemäße mechanische Abdeckvorrichtung dient zum Verdecken der an oder in einem Bewegungshilfsmittel befestigten erfindungsgemäßen Einrichtung. Die Abdeckvorrichtung kann beispielsweise eine Abdeckvorrichtung der Einrichtung in einer Aussparung eines Fahrzeugaußenteils sein. Dabei ist die mechanische Abdeckvorrichtung derart ausgebildet, dass wenn die Abdeckvorrichtung mit der abzudeckenden Einrichtung und dem Bewegungshilfsmittel verbunden ist, sie die abzudeckende Einrichtung und/oder zumindest teilweise das Bewegungshilfsmittel formschlüssig überzieht. Ferner kann die Abdeckvorrichtung eine derartig ausgewählte Steifigkeit aufweisen, dass durch die Abdeckeinrichtung eine nur minimale Dämpfung der gesendeten und/oder empfangenen Schallsignale in einem ausgewählten Frequenzbereich, insbesondere im Hörbereich des Menschen, auftritt. Die Abdeckvorrichtung kann ferner derart ausgestaltet sein, dass sie mit einer Membran eines von der abzudeckenden Einrichtung umfassten Elektro-Akustik-Wandlers akustisch koppelbar ist.

Mittels der erfindungsgemäßen Abdeckeinrichtung kann eine akustische Einrichtung zum Senden und/oder Empfangen zumindest von akustischen Signalen im Hörbereich des Menschen in einem Fahrzeugaußenteil verdeckt eingebaut werden, wodurch eine solche akustische Einrichtung vor äußeren Einflüsse wie Beschädigungen und Diebstahl geschützt wird. Insbesondere ist die Abdeckeinrichtung derart ausgebildet, dass eine optimale Funktionalität einer damit verdeckten akustischen Einrichtung gewährleistet wird.

Bei einer Verwendung der erfindungsgemäßen Einrichtung mit einem Bewegungshilfsmittel können beispielsweise für kurze und bevorzugt höherfrequente Pulse verwendete Wandler in der Nähe der Fahrzeugoberfläche positioniert sind, während Wandler für niederfrequente längere Pulse bevorzugt aus dem Inneren des Fahrzeugs heraus, wie beispielsweise durch den Kühlergrill oder durch funktionsbedingt sowieso vorhandenen Öffnungen heraus ausgesendet werden.

Durch Aussenden im mehreren Frequenzbändern insbesondere auch in dämpfungsarmen Bändern unterhalb von 20 kHz insbesondere durch gleichzeitiges oder quasigleichzeitige Aussenden und/oder insbesondere durch Aussendungen und/oder Empfang von akustischen Signalen via mehrerer Wandler, die zumindest teilweise Signale aus einander überlappenden Bereichen der Umgebung erfassen und/oder insbesondere durch anhand von unterschiedlichen Merkmalen der ausgesandten Signalpulse, wie insbesondere Pulsdauer oder/und Frequenzverlauf der Pulse schafft man mit relativ wenig Mehraufwand redundante Sensorkanäle, wodurch eine höhere Zuverlässigkeit erreicht wird.

Gemäß einer anderen Weiterbildung weist die Einrichtung eine Steuereinrichtung auf, die dazu ausgebildet ist, die Signalform und/oder den Signalstärkenverlauf und/oder mindestens eine Signalstückfolge und/oder den Frequenzverlauf und/oder das Frequenzband mindestens eines der von den mittels der Einrichtung gesendeten Schallsignale und/oder von den zur Kennzeichnung des Bewegungshilfsmittels gesendeten Schallsignalen zu steuern.

Ferner werden gemäß einer anderen bevorzugten Ausführungsform werden Signale der Wandler, die zumindest teilweise einander überlappende Teilbereiche des gesamten Umfeldes um das Bewegungshilfsmittel abdecken, und insbesondere die Empfangssignale aus dem Umfeld von einer bevorzugt für Ansteuerung/Auswertung dieses Teils des gesamten Umfeldes zuständigen Einheit, wie beispielsweise eines Steuergerätes, ausgewertet. Beispielsweise gibt es eine Einheit, die das Umfeld in Fahrtrichtung abdeckt und/oder die das Umfeld für die Rückwärtsfahrt abdeckt und/oder die ein oder mehrere Seiten des Bewegungshilfsmittels abdeckt.

In einer weiteren bevorzugten Ausführung sind die verwendeten Wandler Elektro-Akustik-Wandler.

Die Erfindung ist nicht beschränkt auf Bewegungshilfsmittel bzw. Fahrzeuge oder Autos, die mittels Fremdenergie wie beispielsweise mittels Motor, Kraftstoff oder einem elektrischen Akku angetriebenen werden, sondern kann auch auf andere Arten von Bewegungshilfsmitteln angewandt werden. So kann die Erfindung auch bei Krankenbetten, elektrische Rollstühlen, Fahrrädern, Segway-Fahrzeugen ebenso wie auf durch Muskelkraft angetriebene Fortbewegungsmittel Anwendung finden und auch Fußgängern zur akustischen Orientierung dienen und/oder aus den eintreffenden akustischen Signalen Informationen über die Verkehrssituation bereit stellen. Unter dem Begriff "Bewegungshilfsmittel" können beispielsweise auch Pferdefuhrwerke, geschobene Krankenbetten, Rollstühle, Fahrräder usw. ebenso wie Werkzeuge wie Baumaschinen, Roboter, usw. verstanden werden.

Auch ist die Erfindung nicht etwa beschränkt auf den Ultraschallbereich und den oberen Hörbereich, sondern stattdessen gegebenenfalls auch im unteren Hörbereich Anwendung finden, beispielsweise um dort bereits angewandte oder neu hinzukommende Technologien zu optimieren oder zu ergänzen. Dies ist insbesondere von Vorteil bei der bereits erwähnten Fahrzeug-Fahrzeug-Kommunikation. Ferner wird gemäß einer Variante dieser Ausführungsform erfindungsgemäß eine Fahrzeug-Fahrzeug-Kommunikation ermöglicht, die gleichzeitig zur Übertragung von Fahrzeug-Fahrzeug-Bewegungsrelationen geeignet ist. So kann dabei auch anhand der Amplitude der empfangenen Impulse und deren zeitlicher Relation zueinander ein Empfänger den Abstand zwischen sendendem und empfangendem Fahrzeug schätzen.

Für die ist die erfindungsgemäße Nutzung des Hörbereichs und/oder speziell des unteren Hörbereichs bietet es sich gemäß einer Ausführungsform auch an, beispielsweise Pulse von 0,5s Dauer oder einer kürzeren oder längeren Dauer mit einer Frequenz von 0,5 Hz, oder darüber, zu verwenden, etwa Pulse die von einem Rückfahrwarner oder einem ähnlichen Gerät ausgestrahlt werden. Es werden also Pulse verwendet, die ohnehin schon zur akustischen Kennzeichnung und Warnung verwendet werden. Dabei können die dabei entstehenden Echos beziehungsweise die dabei übertragenen Informationen hin zu anderen Verkehrsteilnehmern auf vorteilhaft die erfindungsgemäße Weise verwendet und ausgewertet werden. Somit können erfindungsgemäß Signale verwendet werden, bei denen es sich, je nach Sichtweise, um funktional sowieso vorhandene Signale oder um die quasiparallel zum Ultraschall gewollt ausgesendeten Signale handelt. Vorteilhaft können mit der Erfindung hohe Reichweiten erzielt werden. Dabei können speziell bei der genannten Niederfrequenz-Ausführungsform auf besonders einfache Weise Reichweiten von deutlich über 10m oder sogar über 100m bei ortender Fahrzeug-Fahrzeug-Kommunikation erreicht werden.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen zeigen:

| | |
|---|---|
| Figur 1 | einen Zeitverlauf mehrerer zumindest teilweise gleichzeitig ausgesandter pulsförmiger Signale nach einer ersten Ausführungsform der Erfindung, wobei die Signale jeweils mehrere Signalstücke mit fester Frequenz umfassen, |
| Figur 2 | einen Zeitverlauf der Frequenz eines Sendepulses nach einer zweiten Ausführungsform der Erfindung, wobei der Sendepuls einen linearen Chirp umfast, |
| Figur 3 | einen Zeitverlauf des Betrages der Autokorrelationsfunktion des gesendeten Chirps aus der Figur 2 in Vergleich zu dem Betrag der Autokorrelationsfunktion eines gleichlangen Sendepulses mit einer festen Frequenz, und |
| Figuren 4a bis 4f | jeweils einen Zeitverlauf der Frequenz eines Sendepulses nach einer weiteren Ausführungsform der Erfindung, wobei jeder Sendepuls einen Chirp umfasst, |
| Figur 5 | einen Zeitverlauf eines beispielhaften Satzes von Schallimpulsen nach einer dritten Ausführungsform der Erfindung, |
| Figur 6 | einen Zeitverlauf eines beispielhaften Satzes von Schallimpulsen nach einer vierten Ausführungsform der Erfindung, und |
| Figur 7 | ein Prinzipschaltbild einer Wandlerendstufe einer erfindungsgemäßen Umfelderfassungseinrichtung. |

Ausführungsformen der Erfindung

Im Folgenden werden bevorzugte Ausführungsformen der Erfindung anhand von den beigefügten Figuren ausführlich erklärt.

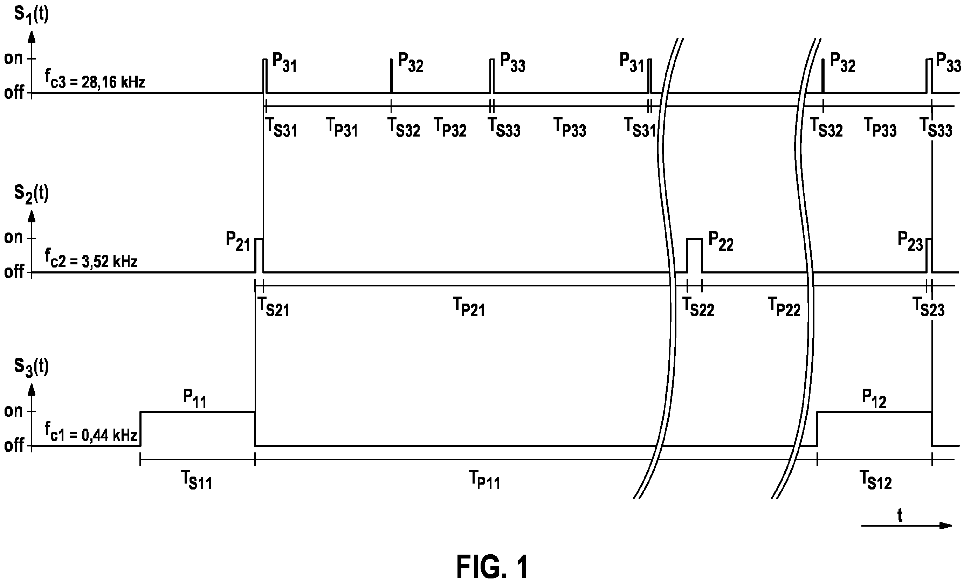

Figur 1 zeigt den von der Zeit t abhängigen Verlauf von drei zumindest teilweise gleichzeitig ausgesandten pulsförmigen Signalen $S_1(t)$, $S_2(t)$ und $S_3(t)$ nach einer ersten Ausführungsform der Erfindung, die jeweils mehrere Signalstücke mit jeweils fester Frequenz $f_{c1}$ $f_{c2}$ und $f_{c3}$ aufweisen. Dabei umfasst das Signal $S_1(t)$ drei sich widerholende Pulse (Signalstücke) $P_{11}$, $P_{12}$, $P_{13}$, von denen in Figur 1 nur zwei Pulse $P_{11}$ und $P_{12}$ dargestellt sind. Das Signal $S_2(t)$ umfasst drei sich wiederholende Pulse (Signalstücke) $P_{21}$, $P_{22}$ und $P_{23}$, die in der Darstellung aus der Figur 1 jeweils nur einmal auftreten. Ferner umfasst das Signal $S_3(t)$ drei sich wiederholende Pulse (Signalstücke) $P_{31}$, $P_{32}$ und $P_{33}$, die sich in der Darstellung aus der Figur 1 jeweils zweimal wiederholen.

Bei dem in der Figur 1 dargestellten Signal-Zeit-Schema der drei jeweils mehrere Festfrequenzsignalstücke ausweisenden Signale $S_1(t)$, $S_2(t)$ und $S_3(t)$ entspricht die Mittenfrequenz $f_{c1}$ des niedrigsten Frequenzbandes 1 in etwa der Frequenz von 0,44 kHz des in Europa als angenehm geltenden Kammertons A. Die Mittenfrequenz $f_{c2}$ des benachbarten zweiten Frequenzbandes 2 entspricht hier beispielhaft dem achtfachen der niedrigsten Mittenfrequenz $f_{c1}$ und liegt hier bei etwa 3,52 kHz und die Mittenfrequenz $f_{c3}$ des dritten Frequenzbandes 3 liegt beispielsweise im Ultraschallbereich bei etwa 28,16 kHz.

Innerhalb eines Frequenzbandes i, i=1, 2, 3 mit einer Mittenfrequenz $f_{ci}$ sind die hier dargestellten Signale $S_i$ durch die mit einem durch ein einfaches Ein- und Ausschalten erzeugten Rechteckfenster modulierten Signalstücke

$S_{si1}$, $S_{si2}$ und $S_{si3}$ die Pulsdauern $T_{si1}$, $T_{si2}$, $T_{si3}$ und die Pulspausendauern $T_{Pi1}$, $T_{Pi2}$, $T_{Pi3}$ gekennzeichnet.

Beispielsweise können die Sendepulsdauer der Pulse $P_{11}$, $P_{12}$ und $P_{13}$ (nicht dargestellt) in dem Frequenzband 1 mit der Mittenfrequenz $f_{c1}$ von 0,44 kHz $T_{s11}$ = 45 ms, $T_{s12}$ = 182 ms, $T_{s13}$ = 1091 ms, in dem Frequenzband 2 mit der Mittenfrequenz $f_{c2}$ von 3,52 kHz $T_{s21}$ = 11,36 ms, $T_{s22}$ = 68,2 ms, $T_{s23}$ = 2,84 ms und in dem Frequenzband 3 mit der Mittenfrequenz $f_{c3}$ von 28,16 kHz $T_{s31}$ = 0,71 ms, $T_{s32}$ = 0,18 ms, $T_{s33}$ = 4,3 ms betragen.

Alternativ können die m-ären Signale durch Kombination von Pulsen aus dem Frequenzband 1 mit der Mittenfrequenz $f_{c1}$ von 0,22 kHz Pulse mit $T_{s11}$ = 273 ms, $T_{s12}$ = 1636 ms, mit Pulsen aus dem Frequenzband 2 mit der Mittenfrequenz $f_{c2}$ von 3,52 kHz $T_{s21}$ = 17,05 ms, $T_{s22}$ = 2,84 ms und aus dem Frequenzband 3 mit der Mittenfrequenz $f_{c3}$ von 48 kHz $T_{s31}$ = 1,00 ms, $T_{s32}$ = 0,17 ms zusammengesetzt werden.

Alternativ können die m-ären Signale durch Kombination von Pulsen mit deutlich unterschiedlichen Signalfrequenzen zusammen gesetzt werden bei denen alle Signalfrequenzen im Ultraschallband bzw. an dessen Grenze liegen und/oder je Signalfrequenz nur eine Pulsdauer genutzt wird wie beispielsweise durch Kombination von Pulsen aus dem Frequenzband 1 mit der Mittenfrequenz $f_{c1}$ von 16 kHz Pulse mit $T_{s11}$ = 30 ms mit Pulsen aus dem Frequenzband 2 mit der Mittenfrequenz $f_{c2}$ von 32 kHz mit $T_{s21}$ = 1,25 ms und aus dem Frequenzband 3 mit der Mittenfrequenz $f_{c3}$ von 64 kHz $T_{s31}$ = 0,08 ms.

Alternativ können die m-ären Signale durch Kombination von Pulsen mit deutlich unterschiedlichen Signalfrequenzen zusammen gesetzt werden bei denen alle Signalfrequenzen im Hörbereich liegen und/oder je Signalfrequenz nur eine Pulsdauer genutzt wird wie beispielsweise durch Kombination von Pulsen aus dem Frequenzband 1 mit der Mittenfrequenz $f_{c1}$ von 160 Hz Pulse mit $T_{s11}$ = 281 ms mit Pulsen aus dem Frequenzband 2 mit der Mittenfrequenz $f_{c2}$ von 1,6 kHz mit $T_{s21}$ = 9,38 ms und aus dem Frequenzband 3 mit der Mittenfrequenz $f_{c3}$ von 16 kHz $T_{s31}$ = 0,31 ms.

Die Frequenzverläufe der einzelnen Schallpulse können sich während der Sendepulsdauer unverändert bei beispielsweise der Mittenfrequenz des Frequenzbandes liegen und/oder sich zeitlich ändern. So kann bei dem zuvor genannten Beispiel die Frequenz des Pulses 2 und 3 während der Aussendung fest sein und sich die des Pulses 1 während der Sendepulsdauer verändern, beispielsweise chirpend.

Weitere Aussendungen auf ein und dem gleichen oder auf mehreren Wandlern, die aus Pulsen deutlich unterschiedlicher Signalfrequenz und optional unterschiedlicher Pulsdauer zusammensetzen, sind erfindungsgemäß möglich.

Die Sendepausen $T_{Pi1}$, $T_{Pi2}$, $T_{Pi3}$ zwischen den Pulsen $P_{i1}$, $P_{i2}$ und $P_{i3}$ betragen typischerweise das 10 bis 100-fache der vorangegangenen Sendepulsdauer innerhalb eines Frequenzbandes i, i = 1,2,3. Über- und Unterschreitungen sind durchaus denkbar. Die Pausendauern $T_{Pi1}$, $T_{Pi2}$, $T_{Pi3}$ sollten variabel nachgeregelt werden, insbesondere abhängig von der Dynamik der aktuellen Verkehrssituation und/oder von der momentanen Stärke der Störungen.

In einer bevorzugten Ausführung ist die Pausendauer und damit die Übertragungszyklusdauer des aktuellen Übertragungszyklus in Abhängigkeit von den zuvor erfolgten Messungen derart zu wählen, dass das Aussenden des Sendepulses, der den Beginn des nachfolgenden Übertragungszyklus markiert, in einen solchen Echolaufzeitbereich des aktuellen Übertragungszyklus erfolgt, für den anhand von Messungen aus den vorangegangenen Echozyklen abgeschätzt wurde, dass in diesem Echolaufzeitbereich kein Signal, insbesondere kein Echosignal, auftreten wird. Mittels dieser Strategie kann die Wahrscheinlichkeit von Kollisionen von Aussendungen und Empfangssignalen minimiert werden.

Das dargestellte Sendeschema kann sowohl die Aussendungen in einem Frequenzband als auch die Aussendungen in unterschiedlichen Frequenzbändern von ein und demselben Elektro-Akustik-Wandler, als auch die Aussendungen von unterschiedlichen Elektro-Akustik-Wandlern betreffen.

Während die ersten Aussendungen der Sendepulse $P_{11}$, $P_{21}$ und $P_{31}$ in den unterschiedlichen Frequenzbändern i, i = 1, 2, 3 zeitlich gegeneinander gestaffelt stattfinden, können die letzteren Sendepulse $P_{12}$, $P_{23}$ und $P_{33}$, wie am Ende der Figur 1 dargestellt ist, zeitgleich auch in unterschiedlichen Frequenzbändern i, i = 1, 2, 3 ausgesandt werden.

Wegen der einfachen Realisierung werden hier Festfrequenzaussendungen bevorzugt. Als Festfrequenz im erweiterten Sinne gilt auch, wenn sich innerhalb der Pulsdauer $T_s$ die Signalfrequenz f um weniger als 3/ $T_s$ ändert. Innerhalb der Pulsdauer $T_{si1}$, $T_{si2}$, $T_{si3}$ können jedoch auch Signale mit zeitveränderlicher Signalfrequenz, wie zum Beispiel Chirps, ausgesandt werden.

Gemäß einem Grundgedanken der vorliegenden Erfindung wird, bei niederfrequenten Bändern i, i=1, 2 die niedrige Dämpfung zur Erzielung hoher Reichweite zu genutzt. Lange Pulse, das heißt solche Sendepulse, die sich aus einer relativ groß Zahl an Signalperioden beinhalten, gestatten eine gute Dopplerauflösung, jedoch durch ihre Länge eher nur eine grobe Ortsauflösung. Mit langen Pulsen erreicht man insbesondere im niederfrequenten Bereich aufgrund der dort herrschenden geringeren Dämpfung eine höhere Reichweite. Sie eigen sich daher bevorzugt zur groben Entfernungsschätzung mit sehr guter Geschwindigkeitsbestimmung (und sogar Beschleunigungsbestimmung). Eine hohe Ortsauflösung erreicht man hingegen besonders gut mit kurzen Pulsen. Diese lassen sich insbesondere in den höheren Frequenzbändern realisieren. Aufgrund der dort herrschenden höheren Raumdämpfung weisen Pulse aus dem höheren Frequenzbereich jedoch eine geringere Reichweite auf.

Je nach Störsituation und/oder Objektsituation kann die Frequenz i, i = 1,2,3 eines Sendepulses $S_1(t)$, $S_2(t)$,

$S_3(t)$ fest sein oder sich chirpend verändern.

Neben der Verwendung von krummen Chirps, bei denen sich die Frequenz nicht proportional zur Zeit verändert, können natürlich auch lineare Chirps, insbesondere im Hörbereich des Menschen liegende, verwendet werden. Durch die Verwendung von Chirps in den Pulsen des menschlichen Hörbereichs gelingt es, die Ortsauflösung von dort üblicherweise angesiedelten langen Pulsen zu verbessern.

Figur 2 zeigt den zeitabhängigen Verlauf der vorzugsweise in Hz gemessenen Frequenz f eines Sendepulses $P_4$ (nicht dargestellt) nach einer zweiten Ausführungsform der Erfindung, wobei der Sendepuls $P_4$ einen linearen Chirp umfasst, dessen Frequenz f insbesondere im Hörbereich des Menschen liegt und sich proportional zur vorzugsweise in Millisekunden gemessenen Zeit t verändert.

In der Figur 3 ist der Verlauf eines normierten Betrages K mehrerer Autokorrelationsfunktionen in Abhängigkeit von der in Millisekunden gemessenen Zeit t dargestellt.

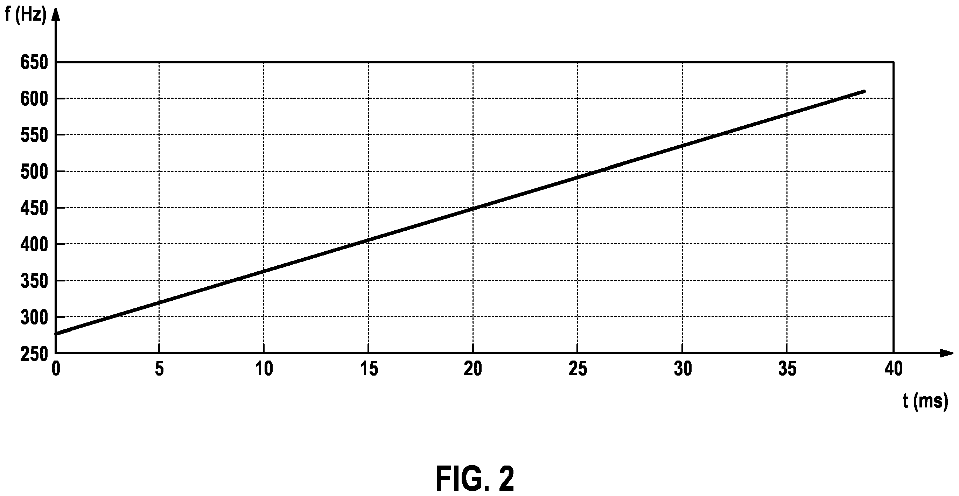

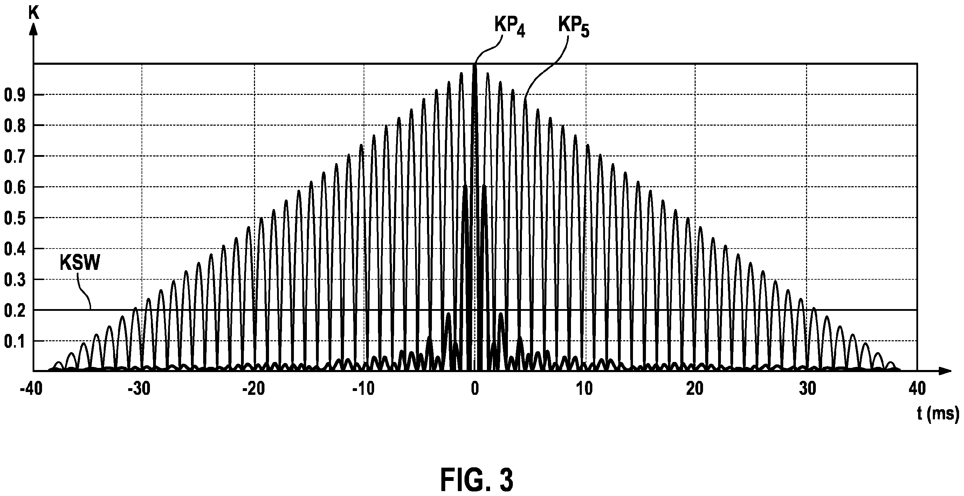

In der Figur 3 ist der Zeitverlauf des Betrages $KP_4$ der Autokorrelationsfunktion des gesendeten Chirpes $P_4$ aus der Figur 2 in Vergleich zu dem Zeitverlauf des Betrages $KP_5$ der Autokorrelationsfunktion eines gleichlangen (nicht dargestellten) Sendepulses $P_5$ mit einer konstanten Frequenz dargestellt.

In der Figur 3 ist auch einen Schwellenwert KSW für einen Autokorrelationsfunktionsbetrag eingezeichnet. Anhand des beispielhaft dargestellten Schwellenwertes KSW wird deutlich, dass sich durch die Pulskompression die Ortsauflösung durch die Verwendung von Chirps beispielsweise um den Faktor von etwa 30 verbessern kann. Die Verwendung von krummen Chirps, insbesondere im Hörbereich des Menschen, gestattet hingegen eine leichtere Bestimmung der Relativgeschwindigkeit durch eine Auswertung der Intrapulsinformationen. Dazu kann beispielsweise für krumme Chirps im Ultraschallbereich die aus dem Dokument DE 102009027842 A1 bekannte Auswertung verwendet werden.

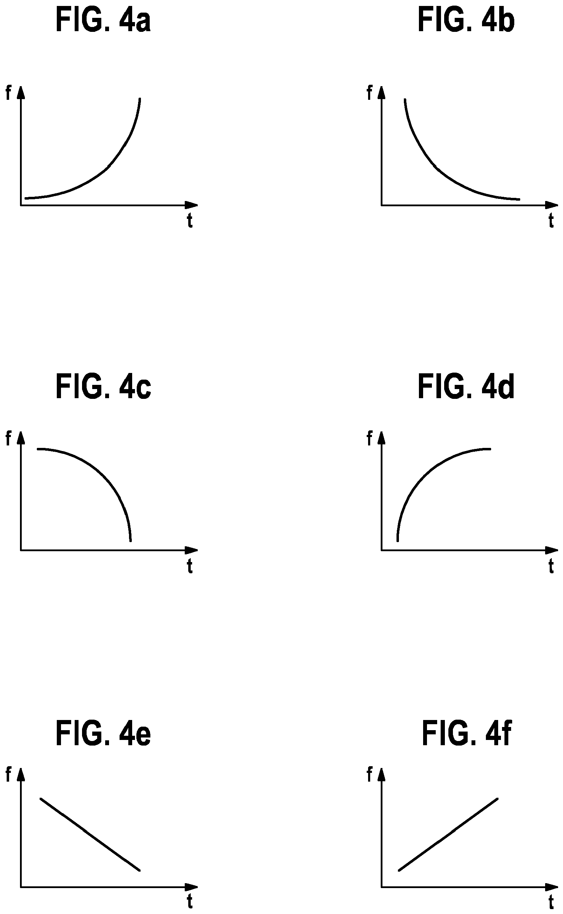

Die Figuren 4a bis 4f zeigen jeweils einen von der Zeit t anhängigen Verlauf der Frequenz f eines Sendepulses (nicht dargestellt) nach einer weiteren Ausführungsform der Erfindung, wobei jeder Sendepuls einen Chirp umfasst. Die in den Figuren 4a bis 4d dargestellten Frequenzverläufe entsprechen jeweils einem krummen Chirp, und die in den Figuren 4e und 4f dargestellten Frequenzverläufe entsprechen jeweils einem linearen Chirp.

Erfindungsgemäß wird insbesondere einen Signal ausgesandt, das einen über den gesamten Hörbereich bis hinein in den Ultraschallbereich verlaufenden Chirp umfasst.

Um das gesamte Spektrum in diesem Sinne optimal zu nutzen, sollten Chirps insbesondere so durch das akustische Signalspektrum laufen, dass sie so wie in der Figur 4a dargestellt langsam beginnend bei niedrigen Frequenzen im unteren Hörbereich immer kürzer verweilend bei den oberen Frequenzen des oberen menschlichen Hörbereichs bis hin zu sehr kurzen Pulsen im Ultraschallbereich verlaufen beziehungsweise, wie in der Figur 4b dargestellt, bei gleicher anteiligen Verweildauer bei den jeweiligen Frequenzbereichen in zeitlich umgekehrter Reihenfolge wie in der Figur 4b dargestellt verlaufen, ohne jedoch die alternativen krummen Chirps mit Frequenzverläufen gemäß den Figuren 4c und 4d beziehungsweise die entsprechenden linearen Chirps mit Frequenzverläufen gemäß den Figuren 4e und 4f auszuschließen.

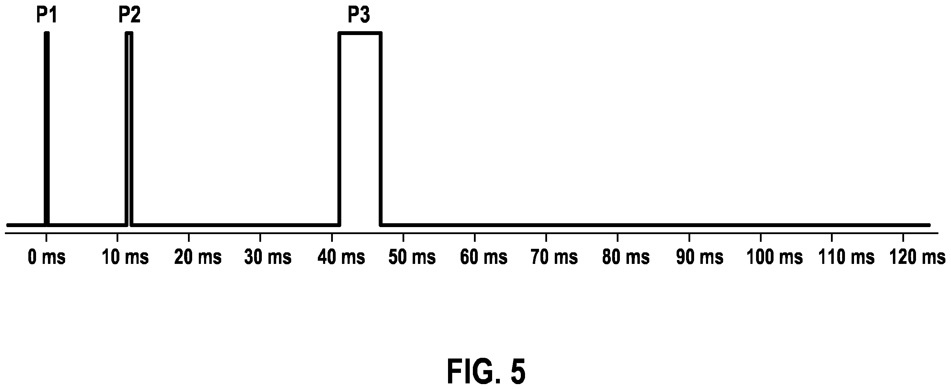

In der Figur 5 wird schematisch ein beispielhafter Satz von innerhalb eines für einen Übertragungszyklus einer Schallimpuls-basierten Umfelddetektion verwendeten Schallimpulsen gemäß einem dritten Ausführungsbeispiel der Erfindung gezeigt.

Es wird bei der Übertragung und Auswertung berücksichtigt, dass der maximal sinnvolle Übertragungszyklus kurzer Pulse kleiner ist als der langer Pulse. Gemäß der dritten Ausführungsbeispiel in Figur 5 hat ein 0,167ms langer Puls eine sinnvoll nutzbare nachfolgende Echoempfangsdauer von ca. 11ms und ein Puls von 1ms eine sinnvoll nutzbare nachfolgende Echoempfangsdauer von ca. 29ms und ein 6ms langer Puls eine sinnvoll nutzbare nachfolgende Echoempfangsdauer von ca. 83ms. Ferner wird ausgenutzt, dass kurze Pulse eine präzisere Ortsauflösung ermöglichen während lange Pulse eine größere Reichweite ermöglichen.

Es wird bei der dritten Ausführungsform ferner das verfügbare akustische Spektrum, dass bekanntlich für die meisten Wandler bei spätestens 100 Hz beginnt und als Hörbereich bis 15 kHz und bei Einschluss des unteren Ultraschallbandes sogar bis 100 kHz geht, durch die Festlegung von Mittenfrequenzen in Frequenzbänder aufgeteilt. Dabei wird jeweils ein genügend großer gegenseitiger Abstand der Mittenfrequenzen $f_{ci}$ eingehalten. Daher können diese Frequenzbänder getrennt voneinander verarbeitet und ausgewertet werden. Gemäß einer ersten Variante dieser Ausführungsform wird für jeden Sensor eines Ultraschallsystems genau eine Mittenfrequenz $f_{ci}$ und Pulsdauer gewählt. Gemäß einer zweiten, bevorzugten Variante wird innerhalb eines Sensors eine redundante Auswertung auf mehreren deutlich voneinander durch Filterung trennbaren Mittenfrequenz $f_{ci}$ und optional zusätzlich unter Verwendung unterschiedlicher Pulsdauern durchgeführt und somit eine kostengünstige Zuverlässigkeitserhöhung vorgenommen. Gemäß einer dritten Variante dieser Ausführungsform können mit gleicher Architektur getrennte sendende und/oder empfangende Wandler berücksichtigt werden.

Gemäß dem dritten Ausführungsbeispiel wird für jedes Frequenzband eine hinreichende Anzahl von Wandlern verwendet, wie weiter unten genauer angegeben wird. Es werden zum Empfangen von Echos die Frequenzbänder nochmals unterteilt, und für jedes Frequenzband-Teilstück werden frequenzmäßig angepasste Akustik-Elektro-Wandler verwendet, die mit vorbestimmtem Frequenzabstand parallel betrieben werden. Dadurch wird, im Gegensatz zum Stand der Technik, eine vereinfachte Detektion von Dopplerverschiebungen ermöglicht. Denn bei pulsdauermodulierten Signalen hängt die Breite des Signalspektrums von der Impulsdauer ab. Verwendet man eine an die Sendesignalform angepasste Filterung, so ist bei inkohärenter Demodulation ein solches Filter im Frequenzabstand von $T_p^{-1}$ zur Signalfrequenz vollständig unsensibel und ansonsten nimmt die Empfindlichkeit mit zunehmendem Abstand zur Sendesignalfrequenz rapide ab. Bei der Dopplerdetektion werden durch die Relativgeschwindigkeit zwischen dem Bewegungshilfsmittel und einen detektierten Objekt im Umfeld des Bewegungshilfsmittels bedingte Frequenzverschiebungen im Echosignal detektiert.

Gemäß einer Variante der Ausführungsform der Erfindung werden jeweils Messsignale nahezu konstanter Signalfrequenz verwendet, so dass die während der Pulsdauer Tp durchstreifte Frequenzbandbreite wesentlich kleiner gewählt wird als die jeweilige Mittenfrequenz $f_{ci}$. Die Dopplerverschiebung und damit in erster Näherung die Relativgeschwindigkeit wird bestimmt, indem der jeweilige Frequenzversatz zwischen ausgesandtem und empfangenem Signale mittels des Satzes angepasster Filter bzw. Wandler konstanter Frequenz ausgewertet wird.

Gemäß einer anderen Variante der Ausführungsform der Erfindung werden die Signalfrequenzen der ausgesandten Schallimpulse zeitlich verändert. So wird beispielsweise eine Signalfrequenz gemäß der Geradengleichung $f(\tau)$ = $m \cdot \tau + f_0$, mit $m$ = const. erzeugt. Dabei ist aber im Gegensatz der Variante mit konstanter Signalfrequenz bei dieser Variante eine mögliche Doppeldeutigkeit bezüglich der Auswertung der detektierten Echopulsfrequenzen zu beachten. So kann eine zu einem Zeitpunkt $\tau_1$ empfangene Signalfrequenz $f_a$ entweder die Konsequenz eines relativ zum Sender und Empfänger in Ruhe befindlichen Reflektors an einem Ort $d_1(\tau_1)$ = $0{,}5 \cdot c \cdot \tau_1$, der der Laufzeit $\tau_1$ entspricht, gemäß $f_a(\tau_1)$ = $m \cdot \tau_1 + f_0$ sein oder die Konsequenz eines zum Sender und Empfänger mit der Relativgeschwindigkeit $v_2$ und zum Zeitpunkt der Reflexion am Ort $d_2(\tau_2)$ = $0{,}5 \cdot c \cdot \tau_2$ befindlichen Reflektors, gemäß

$$f_a(\tau_1) \approx (m \cdot \tau_2 + f_0) \cdot \left(1 + \frac{2 \cdot v_2}{c}\right)$$

sein. Dieser Unschärfe wird hier beispielsweise mit einem Ansatz $f(\tau) = m(\tau) \cdot \tau + f_0$ begegnet, bevorzugt mit $m(\tau) \neq const.$

Ferner kann ein Pulsmuster-Auswertungsverfahren angewandt werden, wie es in einem anderen Patent EP2144069A2 der Anmelderin beschrieben wird. Ferner können auch sogenannte Intrapuls-Frequenzanalyseverfahren leicht auf die hier beschriebenen Signalformen mit schmalbandigen Signalbestandteilen angewendet werden.

Somit wird erfindungsgemäß ein einfaches Erkennen und Auswerten der Dopplerverschiebung in den Empfangssignalen ermöglicht. Außerdem wird auch ein Erkennen und Auswerten der Dopplerverschiebung in den Pulsabständen ermöglicht.

In der Tabelle 1 ist eine beispielhafte Einteilung in geeignete Frequenzbänder mit Angabe der dazugehörigen Trägerfrequenzen, d.h. der Mittenfrequenzen $f_{ci}$ bei einer Ausnutzung sowohl des Ultraschall als auch des Hörbereichs des Menschen gezeigt. Es wird dabei beispielhaft davon ausgegangen, dass eine Relativbewegung von $\pm 60$ km/h aufgelöst werden soll.

Tabelle 1

| Trägerfrequenz fc | Frequenzband bei Dopplerverschiebung | |
|---|---|---|
| | **60 km/h** | **-60 km/h** |
| **48,00 kHz** | 43,29 kHz | 52,71 kHz |
| **24,00 kHz** | 21,65 kHz | 26,35 kHz |
| **16,00 kHz** | 14,43 kHz | 17,57 kHz |
| **12,00 kHz** | 10,82 kHz | 13,18 kHz |
| **8,00 kHz** | 7,22 kHz | 8,78 kHz |
| **6,00 kHz** | 5,41 kHz | 6,59 kHz |

Wie aus der Tabelle 1 entnommen werden kann, wurden die Frequenzbänder und deren Frequenzabstände derart gewählt, dass sie sich gut voneinander trennen lassen und gleichzeitig somit auch auf spektrale Eigenarten der unterschiedlichen Kanäle gut eingegangen werden kann. Eine Relativbewegung von $\pm 60$ km/h entspricht bei akustischen Signalen einer Frequenzverschiebung von ca. 10%. Eine gute Trennbarkeit ist bei dieser Dopplerverschiebung gegeben

$$\frac{n}{m} \cdot fc \cdot (1-10\%) > fc \cdot (1+10\%) \qquad \frac{n}{m} > \frac{(1+10\%)}{(1-10\%)}.$$

wenn gilt: bzw. Diese Bedingung ist sicher eingehalten, beispielsweise wenn die Mittenfrequenzen ein ganzzahliges Frequenzverhältnis zueinander haben. Dies ist auch gemäß Tabelle 1 verwirklicht.

Gemäß noch einer anderen Variante der Ausführungsform der Erfindung wird der Abstand der Trägerfrequenzen, d.h. den Mittenfrequenzen gegenüber den in Tabelle 1 gezeigten Werten weiter verringert. Dies wird insbesondere bei Anwendungen mit langsamen Objektszenen angewandt, wo der Informationsfluss, d.h. die sogenannte Kanalbandbreite gegenüber klassischen Straßenszenen oder schnellen Verkehrsszenen verringert ist. Dies kann beispielsweise bei Bewegungen von langsamen Krankenfahrstühlen oder bei quasistatischen Einparksituationen der Fall sein, wo nur mit geringer Dopplerverschiebung zu rechnen ist.

Die erforderliche Anzahl der angepassten Filter bzw. der Wandler je Frequenzband gemäß dem Beispiel aus Tabelle 1 sind aus der folgenden Tabelle 2 zu entnehmen, wobei weiterhin bis zu +/- 60 km/h mittels Dopplerverschiebungsdetektion zu detektieren sind:

Tabelle 2

| Trägerfrequenz fc in kHz | Frequenzband bei Dopplerverschiebung in kHz | | Demodulatorzahl in Stk. zur Dopplerdetektion bei Pulsdauern von: | | |
|---|---|---|---|---|---|
| | | | 0,17 ms | 1,00 ms | 6,00 ms |
| 48,00 | 43,29 | 52,71 | 1 (**) | 9 $\cong$ 15 km/h je Demod. | 57 $\cong$ 2,1 km/h je Demod. |
| 24,00 | 21,65 | 26,35 | 1 | 5 $\cong$ 30 km/h je Demod. (**) | 29 $\cong$ 4,3 km/h je Demod |
| 16,00 | 14,43 | 17,57 | 1 (*) | 3 $\cong$ 60 km/h je Demod. | 19 $\cong$ 6,7 km/h je Demod (**) |
| 12,00 | 10,82 | 13,18 | 1 | 3 $\cong$ 60 km/h je Demod. (*) | 15 $\cong$ 8,6 km/h je Demod |
| 8,00 | 7,22 | 8,78 | 1 | 1 (ohne Dopplerdetektion) | 9 $\cong$ 15 km/h je Demod (*) |
| 6,00 | 5,41 | 6,59 | 1 | 1 (ohne Dopplerdetektion) | 7 $\cong$ 20 km/h je Demod |

Will man beispielsweise bei einer Mittenfrequenz von 48 kHz Empfangssignale von Sendepulsen mit einer Pulsdauer von 6 ms optimal voneinander trennen, so entnimmt man Tabelle 2, dass neben dem Empfangsfilter für den relativen Ruhezustand 2x28 Filter für den optimalen Empfang von Signalen infolge Dopplerverschiebung empfehlenswert. Damit wird eine sehr hohe Detektionsauflösung von mindestens 2,1 km/h je Filter ermöglicht. Ferner kann beispielsweise mit sogenannten Nulldurchgangsmethoden der Detektionsaufwand weiter reduziert werden.

Die erforderliche Stückzahl der Demodulatoren bzw. der Filter bzw. Wandler zur Dopplerdetektion kann bei unveränderter Pulsdauer auch durch Verringerung der Mittenfrequenz reduziert werden.

Erfindungsgemäß werden bei dem Ausführungsbeispiel aus Figur 5 die Frequenzen bevorzugt derart ausgewählt, dass längere Pulse zur Erzielung größerer Reichweiten mit niedrigeren Frequenzen zur Verringerung des unerwünschten Raumdämpfungseffekts kombiniert werden. Es wird zur Erzielung hoher Reichweiten bevorzugt mit Pulsen niedriger Mittenfrequenz und hoher Pulsdauer gearbeitet.

Gemäß einer besonders bevorzugten Variante des dritten Ausführungsbeispiels der Erfindung wird eine Ausprägung des Sendesignals gewählt, bei der die in Tabelle 2 mit (*) gekennzeichneten Zuordnungen der Pulsdauern zu Trägerfrequenzen erfüllt sind. Gemäß dieser Variante liegen die bevorzugten Zuordnungen der Pulsdauern im oberen Hörbereich. Gemäß einer anderen bevorzugten Variante wird eine alternative Ausprägung des Sendesignals gewählt, bei der die in Tabelle 2 mit (**) gekennzeichneten Zuordnungen erfüllt sind. Gemäß dieser alternativen Variante liegen die bevorzugten Zuordnungen der Pulsdauern im unteren Ultraschallbereich. Jedoch sind auch andere Zuordnungen denkbar als die in Tabelle 2 angegebenen. Obwohl in dieser Ausführungsform drei Mittenfrequenzen mit drei Pulsdauern kombiniert werden, sind auch andere Realisierungen mit einer anderen Anzahl von unterschiedlichen Pulsdauern und/oder Mittenfrequenzen denkbar, je nach Anwendungsfall. Ferner werden bei anderen Ausführungsbeispielen die Pulsbreite variiert und/oder die Abstände der Pulse bzw. Impulse zueinander. Ferner kann bei geeigneten Wandlern auch über ein und dem gleichen Wandler quasigleichzeitig sowohl der mit jeweils (*) gekennzeichnete Satz als auch der mit (**) gekennzeichnete Satz von Pulsen oder ähnliche Mischformen verwendet werden.

Gemäß einer bevorzugten Ausprägung der hier diskutierten dritten Ausführungsform wird mit dem Senden des sehr langen Pulses begonnen, bevor auf einer anderen Mittenfrequenz mit dem Senden eines Pulses kürzerer Pulsdauer fortgefahren wird, und wird beispielsweise als drittes mit dem Senden des kürzesten Pulses begonnen, wobei dessen Sendedauer aufhört, bevor andere Pulse aufhören usw., so nimmt die durch Addition der Pulse generierte Signalleistung des Pulsgemisches schrittweise zu und anschließend wieder ab.

Dadurch kann eine Schallaussendung, die robust gegenüber Störungen, insbesondere gegenüber schmalbandigen Dauerstörungen ist, erreicht werden. Es können auch besonders günstig mit vertretbarem wirtschaftlichem Aufwand spektrale Merkmale, wie z.B. Frequenzgänge der Übertragungsfunktionen, ausgeglichen werden. Außerdem kann auch eine Schallaussendung, die geringe Aufmerksamkeit bei Organismen erzeugen, die diese akustischen Signale wahrnehmen können, erreicht werden. Diese vorteilhaften Eigenschaften können weiter optimiert werden, wenn, gemäß einer Variante der dritten Ausführungsform der Erfindung, ein aus dem empfangenen Schallsignal erzeugtes elektrisches Signal vor einer Auswertung des Schallsignals zur Bestimmung der Position und/oder der Bewegung des ersten Objektes mit einer von innerhalb der Echolaufzeit des empfangenen Schallsignals abhängigen Verstärkung verstärkt wird. Dabei wird bevorzugt die anteilige Signalamplitude der Situation gemäß angepasst.

Gemäß noch einer anderen Ausprägungsvariante des dritten Ausführungsbeispiels der Erfindung wird die Mittenfrequenz $f_{ci}$ des Sendepulses innerhalb der Grenzen eines Frequenzband variiert, so dass sie um bis zu $\pm 1{,}5/T_{pi}$ schwankt, wobei $T_{pi}$ die in dem jeweiligen Übertragungszyklus bei der Mittenfrequenz verwendete Pulsdauer ist. Auf diese Weise wird ein angenehmeres Geräusch erzeugt, außerdem kann die Übertragung noch störungssicherer werden. Insgesamt wird das monotone Hörgefühl verbessert somit die Akzeptanz solcher akustischer Ortungssysteme, insbesondere die im Hörbereich des Menschen arbeitenden, verbessert.

Durch die unterschiedliche Intensität der Spektralbestandteile im Sendepuls kann auch berücksichtigt werden, dass beim Hörer höherfrequente Signalbestandteile erst bei einer höheren Signalstärke zu einem störenden Eindruck führen. Somit kann mit der Erfindung erreicht werden, dass Schallimpuls-basierte Umfelderfassungssysteme mit Frequenzanteilen im Hörbereich eingeführt werden können, die geringe Aufmerksamkeit bzw. Störung bei Organismen erzeugen, die die die verwendeten akustischen Signale wahrnehmen können.

Pulsweise sendende Monofrequenzsysteme im Stand der Technik, wie zum Beispiel bei Festfrequenzsysteme, oder Chirps bei Frequenzen im für Organismen wahrnehmbaren Bereich, wie es beispielsweise der Hörbereich bis 20 kHz ist, haben den Nachteil, dass sie beim Hörer aufgrund ihres plötzlichen Auftretens bzw. Verschwindens bzw. aufgrund ihrer deutlichen Unterscheidbarkeit von natürlichem Signalen wie Rauschen hohe Aufmerksamkeit hervorrufen. Gewöhnlich verbindet der Organismus klare Trennbarkeit von natürlichen Signalen mit Gefahr, wie sie beispielsweise von einem Knall oder einem Warnruf herrührt. Rauschähnliche Signale, noch dazu mit langsamer an- und abschwellender Signalstärke erregen dagegen erheblich weniger Aufmerksamkeit. So erregen beispielsweise die Ablassgeräusche der eine Dampflokomotive antreibenden Zylinder mit einer Wiederholfrequenz von ca. 1...10Hz (im Bahnhof) und dem rauschartigen Frequenzspektrum der dabei entstehenden Schallpulse trotz ihrer erheblich höheren Signalleistung weniger Aufmerksamkeit als akustische Rückfahrwarner, wie sie häufig bei LKW und Bussen in Verbindung mit dem Rückfahrlicht verwendet werden, da diese bei etwa gleicher Pulswiederholfrequenz von ca. 1...10 Hz ein monofrequentes Signalspektrum und plötzlich an- und abnehmende Schallpulse aussenden.

Die Erfindung ist nicht beschränkt auf beispielsweise die in Verbindung mit der dritten Ausführungsform gezeigte Kombination Pulsdauern und Pulsabstand gemäß dem in Figur 5 gezeigten Timing mit dazugehörigen Mittenfrequenzen gemäß Tabelle 1. Es können auch andere geeignete Pulsdauern, Pulsabstände, und Frequenzen gewählt werden, bei der der Hörbereich des Menschen mit ausgenutzt wird. In einfachen Fällen werden die Pulsdauern konstant gewählt. Jedoch kann mit einer gemischten Kombination wie der beispielhaften im Zusammenhang mit dem hier gezeigten dritten Ausführungsbeispiel eine noch höhere Diversifizierung erreicht werden, indem auf zumindest einigen Mittenfrequenzen zumindest zwei unterschiedliche Pulsdauern, hier: drei unterschiedliche Pulsdauern verwendet werden auf einer Mittenfrequenz kann z.B. folgendem Diagramm entsprechen:

Gemäß einer vierten Ausführungsform der Erfindung wird im Vergleich zu der dritten Ausführungsform der Hörbereich des Menschen für die Erfassung des Umfeldes eines Bewegungshilfsmittel in einen noch höheren Maße ausgenutzt.

Tabelle 3 stellt dazu beispielhaft entsprechende andere Signalformen vorwiegend im oberen Hörbereich dar, wobei hier auch die Abstände der Pulsdauern von Faktor 6 auf den Faktor 4 reduziert wurden.

Tabelle 3

| Trägerfrequenz fc in kHz | Frequenzband bei Dopplerverschiebung in kHz | | Demodulatorzahl in Stk. zur Dopplerdetektion bei Pulsdauern von: | | |
|---|---|---|---|---|---|
| | | | 0,33 ms | 1,33 ms | 5,33 ms |
| **24,00** | 21,65 | 26,35 | 1 (**) | 7 ≙ 20 km/h je Demod. | 25 ≙ 5,0 km/h je Demod. |
| **12,00** | 10,82 | 13,18 | 1 | 3 ≙ 60 km/h je Demod. (**) | 13 ≙ 10,0 km/h je Demod |
| **8,00** | 7,22 | 8,78 | 1 (*) | 3 ≙ 60 km/h je Demod. | 9 ≙ 15 km/h je Demod (**) |
| **6,00** | 5,41 | 6,59 | 1 | 1 (ohne Dopplerdetektion). (*) | 7 ≙ 20 km/h je Demod |
| **4,00** | 3,61 | 4,39 | 1 | 1 (ohne Dopplerdetektion) | 5 ≙ 30 km/h je Demod (*) |
| **3,00** | 2,71 | 3,29 | 1 | 1 (ohne Dopplerdetektion) | 3 ≙ 60 km/h je Demod |

Genauso wie bei der dritten Ausführungsform ist auch bei der vierten Ausführungsform die Übertragungszykluszeit kurzer Pulse erheblich geringer als die längerer Pulse, und es werden die kürzere Pulse bzw. Impulse bevorzugt mit einer größeren Pulswiederholrate ausgesandt werden als längere Pulse (Impulse).

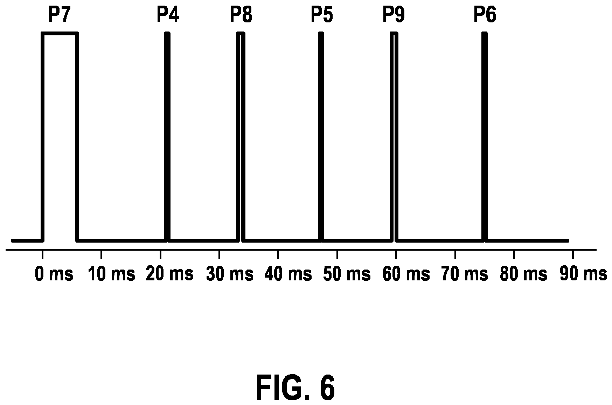

Bei der vierten Ausführungsform werden im Unterschied zu der dritten Ausführungsform die einzelnen zu bestimmten Pulsen gehörigen Impulse mit deren Pulsabständen zeitlich ineinander verschachtelt ausgesendet, wie in Figur 6 gezeigt wird. In Figur 6 sind schematisch drei relativ kurze Impulse P4, P5, P6 mit entsprechend kurzen Impulsabstand dargestellt, ein langer, zu einem entsprechend großen Impulsabstand gehöriger Impuls P7, sowie zwei mittlere Pulse P8, P9 mit einem entsprechen Mittel-langen Intervall, welches zwischen der Intervalllänge der kurzen Pulse P4, P5, P6 und der langen Pulse, von denen nur ein Puls P7 gezeigt ist, liegt. Dabei wird erfindungsgemäß auf vorteilhafte Weise ausgenutzt, dass die unterschiedlichen Pulsdauern im Empfangssignal wiedererkannt werden und somit eine Zuordnung der Empfangssignale zu den Echolaufzeiten bei pulsdauercodierten Pulsen möglich ist.

Ferner wird bei den hier gezeigten Ausführungsformen der Erfindung die Pulsdauer der langen, Energiereichen Pulse bevorzugt derart gewählt, dass sie auf einer für den Menschen angenehmen, kaum spürbaren Frequenz liegen. So soll der gemäß Figur 6 gezeigte lange, 6ms-Puls mit einer Pulsrate von ca. 11 Hz gesendet werden, was einem tiefen Brummen entspricht.

Gemäß noch einer anderen Ausführungsform der Erfindung werden die in Figur 5 oder Figur 6 gezeigten zeitlichen Impulsverläufe jeweils gleichzeitig auf mehreren Mittenfrequenzen ausgesandt. Ein solches System ist besonders robust gegenüber schmalbandigen Störungen. Dies trifft besonders bei einer bevorzugten Ausprägung der dritten Ausführungsform, bei der die Mittelfrequenz bei detektierter hoher Störung variiert wird. Somit kann vorteilhaft eine breitbandige bzw. quasibreitbandige Detektion realisiert werden, um möglichst effektiv eine Totalauslöschung aufgrund destruktiver Überlagerung zu verhindern.

Bei bevorzugten Ausführungsformen der Erfindung wird somit ein möglichst großer Teil des akustischen Spektrum genutzt, wobei dank der durch einen großen Abstand der Mittenfrequenzen eine gute Trennbarkeit der Spektralbereiche erreicht wird, da sich Aussendungen auf einer Mittenfrequenz nicht so stark auf Empfang auf einer anderen Mittenfrequenz auswirken, so dass die oben beschriebenen Zeitverläufe auf verschiedenen Mittenfrequenzen gegeneinander versetzt betrieben werden. Dies gilt insbesondere dann, wenn die Timings von an verschiedenen Orten sendenden Wandlern derart ineinander verschachtelt werden, dass gerade sendende Wandler möglichst weit weg von Wandlern sind, die in dem gleichen Moment besonders leise Empfangssignale erwarten.

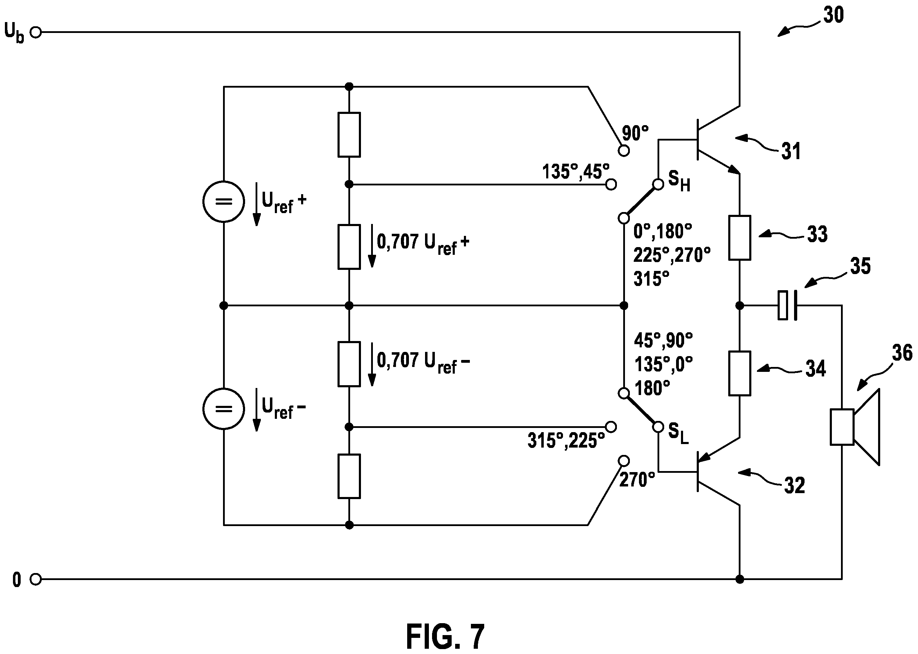

Im Folgenden wird in Verbindung mit der Figur 7 eine Endstufe einer erfindungsgemäßen Einrichtung gezeigt, mit der vorteilhaft eine aufwandsarme Synthese zuvor genannter Signale realisiert werden kann. Die Signale werden dabei bevorzugt auf der Basis eines zentralen Taktsystems und durch Schalten von Stromquellen generiert.

Die in Figur 7 gezeigte Endstufe 30 kann in Wandlern zur Generierung insbesondere der in Zusammenhang mit den zuvor genannten Ausführungsformen des erfindungsgemäßen Verfahrens verwendet werden.

Gemäß Figur 7 wirken die beiden Transistoren 31, 32 jeweils zusammen mit ihren am Emitter angeschlossenen Widerständen als Stromquelle, wobei die Stromstärke von der an ihrer Basis angelegten Referenzspannung abhängt.

Die Schaltung wird gemäß Figur 7 mit einer an einem Pol anliegenden Versorgungsspannung $U_b$ betrieben, deren Stärke je nach Anwendung geregelt wird. Die Schaltung der Endstufe weist ferner zwei Schalter $S_H$ und $S_L$ auf, mittels denen die Zeitdauern der Signalperioden durch geeignetes, periodisches Umschalten der Schalter $S_H$ und $S_L$ jeweils in Abtastzeitpunkte (Sample-Nummern) eingeteilt werden. In Figur 7 sind für jeden der beiden Schalter $S_H$ und $S_L$ jeweils drei mögliche Schaltpositionen angedeutet, und jede der Schaltpositionen steht für einen Phasenwinkel eines zu erzeugenden Schallsignals. Beispielhaft zugeordnete Phasenwinkel sind ebenfalls aus der Figur 7 ersichtlich. Die Steuerung wird so vorgenommen, dass entweder nur der obere Transistor 31 oder nur der untere Transistor 32 als Stromquelle aktiv ist. Über einen Kondensator 35 sind die Emitter der Stromquellen 31, 32 mit einem Lautsprecher 36 gekoppelt, um Schall insbesondere im Hörbereich oder im Ultraschallbereich auszugeben.

Tabelle 4 zeigt eine Übersicht der Phasenwinkel aus Figur 7. Gemäß dem fünften Ausführungsbeispiel der Erfindung wird dabei von einer Abtastfrequenz von 192 kHz ausgegangen, wie auch aus Tabelle 4 ersichtlich ist.

Tabelle 4

| Tragerfrequenz fc | Abtastfrequenz F = 192 kHz | Sample-Nummer | | | | | | | | | | | | | |
|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 |
| Tragerfrequenz fc | Teiler | entsprechende Korrelatorkoeffizienten | | | | | | | | | | | | | |
| 48,00 kHz | fc = F/4 | 0° | 90° | 180° | 270° | usw | | | | | | | | | |
| 24,00 kHz | fc = F/8 | 0° | 45° | 90° | 135° | 180° | usw. | | | | | | | | |
| 16,00 kHz | fc = F/12 | 0° | 30° | 60° | 90° | 120° | 150° | 180° | 210° | usw. | | | | | |
| 12,00 kHz | fc = F/16 | 0° | 22,5° | 45° | 67,5° | 90° | 112,5° | 135° | 157,5° | 180° | usw. | | | | |
| 8,00 kHz | fc = F/24 | 0° | 15° | 30° | 45° | 60° | 75° | 90° | 105° | 120° | 135° | 150° | 165° | 180° | usw. |
| 6,00 kHz | fc = F/32 | 0° | 11,25° | 22,5° | 33,75° | 45° | 56,25° | 67,5° | 78,75° | 90° | usw. | | | | |

So kann man beispielsweise bei der Tabelle genannten Abtastfrequenz F von in diesem Fall 192 kHz eine Sinuskurve von 48 kHz approximieren, indem die Endstufensteuerung nacheinander auf die Schalterpositionen 0°, 90°, 180°, 270°, 0°, ... usw. einschaltet. Eine Frequenz von 24 kHz lässt sich äquivalent durch Schalten der Schalterpositionen 0°, 45°, 90°, 135°, 180°, 225°, 270°, 315°, 0°, ... usw. einschaltet. Niederfrequente Signale lassen sich äquivalent durch Halbierung der zugehörigen Schrittrate generieren. Im dargestellten Fall werden nur die zwei Referenzspannungswerte $U_{ref}$; $2^{-0,5} \cdot U_{ref}$ generiert und auf die Verwendung der in der Tabelle angegeben Koeffizienten, wird bei der hier vorgestellten einfachen Schaltung zu Lasten eines höheren Klirrens verzichtet. Bei Verwendung komplexerer Schalter und mehrerer Referenzspannungen ist die Generierung anderer Signalfrequenzen bei gleicher Schrittweite jedoch möglich. Mehrere nach gleichem Prinzip realisierte Stromtreiber gestatten mehrere Signalformen auf den Lautsprecher zu gegeben, indem die Widerstände der Stromtreiber an ihrem gemeinsamen Verbindungspunkt zusammen gebracht werden. Alternative kann die Stromaddition jedoch auch auf der lastlosen Seite der Endstufe erfolgen. Dazu passende klirrarme Verstärker sind Fachmann bekannt.

Vorteilhaft an der hier dargestellten Endstufe durch Stromaddition an gewissen Abtastpunkten ist die einfache Realisierbarkeit im Verhältnis zur Verwendung sensibler AB-Endstufen. Dem Fachmann ist bekannt, wie Stromschalterstufen äquivalent der heute bereits verwendeten Stromtreiberstufe bei den sendenden Wandlern vorgeschalteten Übertragern mit zwei Endstufen aufgebaut werden.

Um das Umfeld eines Bewegungshilfsmittels, insbesondere eines Fahrzeugs, optimal erfassen zu könne, wirken nach einer Ausführungsform der Erfindung mehrere Wandler als Sender und/oder Empfänger zusammen, und werden von einer zentralen Ansteuerung angesteuert und ausgelesen. So kann eine erfindungsgemäße Umfelderfassungseinrichtung auch mehrere Sender-Endstufen mit beispielsweise dem in Figur 7 gezeigten Prinzip umfassen. Die Wandler werden geeignet im Fahrzeug positioniert.

Beispielsweise kann der sehr lange Puls zu Beginn des Zeitdiagramms gemäß Figur 6 durch eine Schallquelle hinter dem Kühlergrill oder einem anderen Karosserieteil ausgesandt werden, während die sehr kurzen Pulse von über der Fahrzeugoberfläche bevorzugt 3-dimensional verteilten Sendern beispielsweise in Form einer Art von Positions-Hopping, bei dem der nachfolgende Sender möglichst weit von dem vorhergehenden Sender entfernt ist, ausgesandt werden. Andere, dazwischen liegende Pulsdauern werden beispielsweise von zwei in den Scheinwerfern integrierten Wandlern ausgesandt, die somit einen großen Basisabstand bekommen.

Die Erfindung ist nicht auf die in Zusammenhang mit der Figur 7 gezeigten Komponenten beschränkt. Zur Implementierung des erfindungsgemäßen Verfahrens können im Prinzip die meisten der geeigneten heutzutage marküblichen Akustikbauelemente verwendet werden. So können beispielsweise heute bewährte Ultraschall-Piezo und/oder auch Lautsprecher und Elektretmikrofone als Sensor verwendet werden.

Der Fachmann erkennt, dass die Erfindung durch den Rahmen der beigefügten Ansprüche bestimmt ist, und dass die hier gezeigten Ausführungsbeispiele lediglich zur Erläuterung und Erklärung dienen, jedoch die beanspruchte Erfindung in keiner Weise beschränkten. Insbesondere erkennt der Fachmann, dass viele geeignete Ergänzungen und Modifikationen der Ausführungsbeispiele und Weiterbildungen den Rahmen der beanspruchten Erfindung nicht verlassen, insbesondere erkennt der Fachmann dass die Ausführungsbeispiele auf zweckmäßig Art und Weise kombiniert werden können.

Neben der voranstehenden schriftlichen Offenbarung wird hiermit zur weiteren Offenbarung der Erfindung ergänzend auf die Darstellung in den Figuren 1 bis 7 Bezug genommen.

Zusammenfassend, es wird dank der Erfindung auch der Frequenzbereich unterhalb des Ultraschallbandes effektiv eingesetzt, um eine Umfelderfassung für ein Bewegungshilfsmittel, insbesondere für ein Fahrzeug, zu realisieren. Bevorzugt werden akustische Signale im Hörbereich des Menschen verwendet, wodurch vorteilhaft Abstandsbestimmungen beziehungsweise Informationsübertragungen über sehr große Distanzen von über 100 m insbesondere in störungsarmer Umgebung durchführbar sind. Je nach Anwendungsfall, Erfordernissen und Ausprägung stehen verschiedene anpassbare Weiterbildungen der Erfindung zur Verfügung. Insbesondere können mehrere Mittenfrequenzen und Frequenzbänder genutzt werden, wie oben beschrieben wird. Der Frequenzbereich des Menschen kann mit dem herkömmlich verwendeten Ultraschallband vorteilhaft kombiniert werden, oder es wird ausschließlich der Hörbereich des Menschen verwendet. Die Erfindung kann sich die Vorteile beider Frequenzbereiche zunutze machen, insbesondere des Hörbereich des Menschen, was aufgrund der fortgeschrittenen Wandlertechnik auch kostengünstig realisiert werden kann.

Nach Weiterbildungen der Erfindung wird durch eine Nutzung unterschiedlicher Mittenfrequenzen $f_{ci}$ ein Quasiparallelbetrieb ermöglicht wird. Dies kann vorteilhaft geschehen durch Signaltrennung mittels Frequenztrennung als auch mittels unterschiedlicher Signalformen, bevorzugt mittels Pulsdauercodierung. Dadurch wird eine Zuverlässigkeitssteigerung erreicht, insbesondere unter Nutzung spektralmäßig wie auch räumlich getrennter signalaussendender und/oder signalempfangender Wandler. Es stehen Mittel zur Verfügung, eventuelle spektrale Eigenarten wie destruktive Überlagerung und/oder Frequenzgänge und/oder schmalbandigen Dauerstörern auszugleichen.

**Patentansprüche**

1. Verfahren zum Informationsaustausch mit der Umgebung von Bewegungshilfsmitteln und/oder zur akustischen Erfassung des Umfeldes eines Bewegungshilfsmittels durch Bestimmung der Position und/oder der Bewegung von Objekten in der Umgebung eines Bewegungshilfsmittels mittels pulsförmig ausgesendeter Schallsignale $(S_i(t))$, wobei eine Schallaussendung, die Impulse $(P_i)$ voneinander unterschiedlicher Mittenfrequenz $f_{ci}$ aufweist, durchgeführt wird derart, dass ein für die pulsförmigen Schallsignale $(S_i(t))$ verwendeter Frequenzbereich in jeweils eine der verwendeten Mittenfrequenzen $f_{ci}$ aufweisende Frequenzbänder aufgeteilt wird und die Mittenfrequenzen benachbarter Bänder $f_{ci}$, $f_{ci+1}$ einen vorbestimmten Mindestabstand voneinander haben,
**dadurch gekennzeichnet, dass**
die Impulse $(P_i)$ voneinander unterschiedlicher Mittenfrequenz $f_{ci}$ zumindest zeitweise gleichzeitig ausgesendet werden, wobei der vorbestimmte Mindestabstand für die auf die Mittenfrequenzen benachbarter Bänder $f_{ci}$, $f_{ci+1}$

gleichzeitig ausgesendeten und eine Impulsdauer $T_P$ aufweisenden Impulse $(P_i)$ der Bedingung $\left| f_{ci+1} - f_{ci} \right| > \dfrac{10}{T_P}$ genügt,
wobei die Impulse jeweils ein eine charakteristische Signalstückfolge aufweisendes Pulsmuster innerhalb der Pulsdauer aufweisen, und
wobei die verwendeten Mittenfrequenzen in einem ganzzahligen Frequenzverhältnis zueinander stehen.

2. Verfahren nach Anspruch 1, wobei zumindest ein Schallimpuls $(P_i)$ der Frequenzen unterhalb der Ultraschall-Frequenzgrenze von 20 kHz aufweist empfangen und verwendet wird.

3. Verfahren nach Anspruch 1 oder 2, wobei die Impulse $(P_i)$ voneinander unterschiedlicher Mittenfrequenz $f_{ci}$ zeitweise hintereinander folgend ausgesendet werden.

4. Verfahren nach einem der vorhergehenden Ansprüche, wobei sich die bei ein und derselben Mittenfrequenz $f_{ci}$ verwendeten Impulsdauern in verschieden Übertragungszyklen voneinander unterscheiden, und/oder innerhalb eines Zeitbereichs in der Größenordnung eines Übertragungszyklus übertragenen Impulsen mit voneinander unterschiedlichen Mittenfrequenzen $f_{ci}$ ausgesendete Schallimpulse $(P_i)$ voneinander unterschiedliche Impulsdauern aufweisen, und/oder innerhalb eines Zeitbereichs in der Größenordnung eines Übertragungszyklus Schallimpulse $(P_i)$ mit voneinander unterschiedlichen Mittenfrequenzen $f_{ci}$ ausgesendet werden, die zu jeweils unterschiedlichen Zeitenpunkten beginnen und/oder enden.

5. Verfahren nach einer der vorhergehenden Ansprüche, wobei bei Signalbestandteilen niedriger Mittenfrequenz $f_{ci}$ bevorzugt Pulse $(P_i)$ längerer Dauer verwendet werden und/oder seltener Pulse $(P_i)$ gesendet werden als bei den Signalbestandteilen mit höheren Mittenfrequenzen $f_{ci}$ und/oder dass auf unterschiedlichen Mittenfrequenzen $f_{ci}$ generierten Schallimpulse $(P_i)$ unterschiedliche Signalstärken aufweisen.

6. Verfahren nach einem der vorhergehenden Ansprüche, wobei eine bei einer Mittenfrequenz $f_{ci}$ generierte Signalfrequenz im Bereich der Mittenfrequenz vorwiegend in einem Frequenzband von bis zu $\pm 1{,}5/ Tp_i$ schwankt, wobei $Tp_i$ die in dem jeweiligen Übertragungszyklus bei der Mittenfrequenz verwendete Pulsdauer ist.

7. Verfahren nach einem der vorhergehenden Ansprüche, wobei ein akustischer Puls $(P_i)$ gesendet wird, der ein Signalstück mit einer festen Frequenz innerhalb der Pulsdauer und/oder ein Signalstück mit einer zeitabhängigen Frequenz, insbesondere einen Chirp, innerhalb der Pulsdauer aufweist.

8. Verfahren nach einem der vorhergehenden Ansprüche, wobei ein Schallsignal in einem ausgewählten Frequenzband gesendet wird, in dem vor dem Senden des Schallsignals eine einen vordefinierten Störsignaldichtenschwellenwert unterschreitenden Störsignaldichte vorherrschte, und/oder wobei mindestens ein bestimmtes akustisches Signal mit einer solchen ausgewählten Signalform gesendet wird, dass die ausgewählte Signalform sich von den Signalformen der vor dem Senden des bestimmten akustischen Signals vorherrschenden akustischen Signalen jeweils unterscheidet, und/oder wobei dass abhängig von der Störsituation mindestens eine Mittenfrequenz variiert wird, falls in der bisher verwendeten Position hinreichend hohe Störung auftritt.

9. Verfahren nach einem der vorhergehenden Ansprüche, wobei, insbesondere für eine Kommunikation zwischen Bewegungshilfsmitteln, von anderen Bewegungshilfsmitteln, insbesondere Fahrzeugen bzw. Einrichtungen in der Fahrzeugumgebung, von dem Bewegungshilfsmittel ausgesandte Schallsignale, die durch mehrere Mittenfrequenzen gekennzeichnet sind, aufgenommen und ausgewertet werden, und/oder dass zur Übertragung von Informationen von oder/und zu dem Bewegungshilfsmittel dazu bestimmte Schallsignale aus einem Satz von möglichen, den jeweiligen Übertragungspartnern bekannten Schallsignalen ausgewählt und ausgesandt werden, die durch mehrere Mittenfrequenzen gekennzeichnet sind.

10. Verfahren nach einem der vorhergehenden Ansprüche, wobei die ausgesendeten Schallsignale zur akustischen Kennzeichnung des Bewegungshilfsmittels verwendet werden und/oder wobei die Signalform und/oder der Signalstärkenverlauf und/oder zumindest eine Signalstückfolge und/oder der Frequenzverlauf und/oder das Frequenzband eines gesendeten Signals zur akustischen Kennzeichnung des Bewegungshilfsmittels in Abhängigkeit von einer berechneten Wahrscheinlichkeit einer Kollision mit dem mindestens einem Objekt, insbesondere einem zweiten Bewegungshilfsmittel, ausgewählt wird.

11. Verfahren nach einem der vorhergehenden Ansprüche, wobei ein aus dem Echo eines empfangenen Schallsignals erzeugtes elektrisches Signal vor einer Auswertung des empfangen Schallsignals zur Bestimmung der Position und/oder der Bewegung eines ersten Objektes mit einer von der Echolaufzeit des empfangenen Schallsignals abhängigen Verstärkung verstärkt wird.

12. Verfahren nach einem der vorhergehenden Ansprüche, wobei zur Auswertung der Schallsignale eine Messfolge bezüglich eines Zeitverlaufes der Periodendauern des empfangenen Schallsignals bestimmt und bereitgestellt wird und mit mindestens einer Referenzfolge verglichen wird und eine Vergleichsinformation bezüglich einer Abweichung der Messfolge von der Referenzfolge bestimmt wird und zumindest eine Teilfolge der Vergleichsinformation zur Bestimmung einer Information zumindest bezüglich des eines der gesendeten Schallsignale ($S_i(t)$) und zur Bestimmung der Position und/oder der Bewegung des ersten Objektes und/oder zur Bestimmung der Position und/oder der Bewegung und/oder mindestens eines Formmerkmals mindestens eines zweiten, reflektierenden Objektes, das sich zwischen dem eigenen Fahrzeug und dem ersten Objekt befindet, berücksichtigt wird.

13. Verfahren nach einem der vorhergehenden Ansprüche, wobei die räumliche Beziehung eines mit mindestens zwei räumlich getrennten akustischen Empfängern ausgestatteten Beobachters zu einer Schallquelle und/oder die räumliche Beziehung eines Empfängers zu einem mit mindestens zwei räumlich getrennten Schallquellen ausgestatteten Senders anhand der Laufzeitunterschiede der ausgesandten akustischen Signale zueinander ermittelt wird.

14. Einrichtung zum Informationsaustausch mit der Umgebung von Bewegungshilfsmitteln und/oder zur akustischen Erfassung des Umfelds eines Bewegungshilfsmittels durch Bestimmung der Position und/oder der Bewegung von Objekten in der Umgebung eines Bewegungshilfsmittels mittels pulsförmig ausgesendeter Schallsignale ($S_i(t)$) und/oder durch Informationsübertragung durch Aussenden bestimmter Signalformen aus einem Satz möglicher Signalformen, wobei die Einrichtung dazu ausgebildet ist, das Verfahren nach einem der vorhergehenden Ansprüche durchzuführen.

15. Einrichtung nach Anspruch 14, die mehrere lokale Steuergeräte enthält, die jeweils mehrere der zur Umfelderfassung verwendeten Wandler zur Aussendung ansteuern und/oder von den Wandlern aufgenommene akustische Signale auswerten können, wobei die Einrichtung derart ausgebildet ist, dass zur Auswertung Signale eines Teilbereichs des Umfelds in zumindest jeweils einem lokalen Steuergerät ausgewertet werden und somit die mittels mehreren Wandlern erzeugten Informationen über das erfasste Umfeld zur Weiterverarbeitung bereitgestellt werden und/oder wobei die Einrichtung ferner zumindest ein lokales Steuergerät, das nicht unmittelbar an der Fahrzeugaußenhaut montiert ist, aufweist und/oder wobei die Steuergeräte, insbesondere zur Abstimmung des Zeitverhaltens der akustischen Aussendungen, durch geeignete Mittel miteinander synchronisiert sind.

16. Einrichtung nach Anspruch 14 oder 15, die eine Steuereinrichtung aufweist, die dazu ausgebildet ist, die Signalform und/oder den Signalstärkenverlauf und/oder mindestens eine Signalstückfolge und/oder den Frequenzverlauf und/oder das Frequenzband mindestens eines der von den mittels der Einrichtung gesendeten Schallsignale ($S_i(t)$) und/oder von den zur Kennzeichnung des Bewegungshilfsmittels gesendeten Schallsignalen ($S_i(t)$) zu steuern.

17. Einrichtung nach einem der Ansprüche 14 bis 16, aufweisend einen akustischen Sensor, der eine zum Aussenden und/oder Empfangen von Schallsignalen ($S_i(t)$) eingerichtete Membran mit mindestens zwei Teilbereichen mit zueinander jeweils unterschiedlichen Resonanzeigenschaften aufweist und derart eingerichtet ist, dass die unterschiedlichen Resonanzeigenschaften jeweils mittels mindestens eines an die Membran angekoppelten elektromechanischen Wandlers genutzt werden können durch jeweiliges Ansteuern der Membran mit an eine jeweilige Resonanzeigenschaft angepasster Ansteuerungsfrequenz.

18. Bewegungshilfsmittel, insbesondere ein Kraftfahrzeug, aufweisend eine Einrichtung gemäß einer der Ansprüche 14 bis 17.

**Claims**

1. Method for interchanging information with the surroundings of mobility aids and/or for acoustically detecting the environment of a mobility aid by determining the position and/or the movement of objects in the surroundings of a mobility aid by means of sound signals ($S_i(t)$) transmitted in pulsed form, wherein a sound transmission having pulses ($P_i$) of different centre frequency $f_{ci}$ is performed such that a frequency range used for the pulsed sound signals ($S_i(t)$) is split into frequency bands each having one of the centre frequencies $f_{ci}$ used and the centre frequencies of adjacent bands $f_{ci}$, $f_{ci+1}$ are at a predetermined minimum interval from one another,
**characterized in that**
the pulses ($P_i$) of different centre frequency $f_{ci}$ are at least intermittently transmitted at the same time, wherein the predetermined minimum interval for the pulses ($P_i$) transmitted at the same time on the centre frequencies of adjacent bands $f_{ci}$, $f_{ci+1}$ and having a pulse duration $T_p$ satisfies the condition $\left| f_{ci+1} - f_{ci} \right| > \dfrac{10}{Tp}$, wherein the pulses each have a pulse pattern having a characteristic signal piece sequence within the pulse duration, and wherein the centre frequencies used are in an integer frequency ratio to one another.

2. Method according to Claim 1, wherein at least one sound pulse ($P_i$) having frequencies below the ultrasound frequency limit of 20 kHz is received and used.

3. Method according to Claim 1 or 2, wherein the pulses ($P_i$) of different centre frequency $f_{ci}$ are transmitted intermittently in succession.

4. Method according to one of the preceding claims, wherein the pulse durations used at one and the same centre frequency $f_{ci}$ differ from one another in different transmission cycles, and/or sound pulses ($P_i$) transmitted within a time range in the order of magnitude of a transmission cycle transmitted pulses at different centre frequencies $f_{ci}$ have different pulse durations, and/or, within a time range in the order of magnitude of a transmission cycle, sound pulses ($P_i$) having different centre frequencies $f_{ci}$ are transmitted that begin and/or end at respectively different times.

5. Method according to one of the preceding claims, wherein signal components of low centre frequency $f_{ci}$ result in preferably pulses ($P_i$) of longer duration being used and/or pulses ($P_i$) being sent less frequently than in the case of the signal components having higher centre frequencies $f_{ci}$ and/or wherein sound pulses ($P_i$) generated at different centre frequencies $f_{ci}$ have different signal strengths.

6. Method according to one of the preceding claims, wherein a signal frequency generated at a centre frequency $f_{ci}$ fluctuates predominantly in a frequency band of up to $\pm 1.5/Tp_i$ in the range of the centre frequency, where $Tp_i$ is the pulse duration used in the respective transmission cycle at the centre frequency.

7. Method according to one of the preceding claims, wherein an acoustic pulse ($P_i$) is sent that has a signal piece at a fixed frequency within the pulse duration and/or a signal piece at a time-dependent frequency, in particular a chirp, within the pulse duration.

8. Method according to one of the preceding claims, wherein a sound signal is sent in a selected frequency band in which a noise signal density below a predefined noise signal density threshold value prevailed before the sending of the sound signal, and/or wherein at least one particular acoustic signal is sent having a selected signal form such that the selected signal form differs in each case from the signal forms of the acoustic signals prevailing before the sending of the particular acoustic signal, and/or wherein that at least one centre frequency is varied on the basis of the noise situation if a sufficiently high level of noise occurs in the position used hitherto.

9. Method according to one of the preceding claims, wherein, in particular for a communication between mobility aids, other mobility aids, in particular vehicles or devices in the vehicle surroundings, pick up and evaluate sound signals transmitted by the mobility aid, which are **characterized by** multiple centre frequencies, and/or wherein, for the purpose of transmitting information from and/or to the mobility aid, sound signals intended therefor are selected from a set of possible sound signals known to the respective transmission partners and are transmitted, said sound signals being **characterized by** multiple centre frequencies.

10. Method according to one of the preceding claims, wherein the transmitted sound signals are used for acoustic characterization of the mobility aid and/or wherein the signal form and/or the signal strength characteristic and/or at least one signal piece sequence and/or the frequency characteristic and/or the frequency band of a sent signal for acoustically characterizing the mobility aid is/are selected on the basis of a calculated likelihood of a collision with the at least one object, in particular a second mobility aid.

11. Method according to one of the preceding claims, wherein an electrical signal produced from the echo of a received sound signal is boosted using a gain dependent on the echo delay of the received sound signal before the received sound signal is evaluated to determine the position and/or the movement of a first object.

12. Method according to one of the preceding claims, wherein to evaluate the sound signals a measurement sequence in respect of a time characteristic of the period durations of the received sound signal is determined and provided and is compared with at least one reference sequence, and comparison information in respect of a difference in the measurement sequence from the reference sequence is determined and at least one part-sequence of the comparison information is taken into consideration to determine information at least in respect of one of the sent sound signals ($Si(t)$) and to determine the position and/or the movement of the first object and/or to determine the position and/or the movement and/or at least one form feature of at least one second, reflecting object that is between the ego vehicle and the first object.

13. Method according to one of the preceding claims, wherein the spatial relationship between an observer equipped with at least two physically separate acoustic receivers and a sound source and/or the spatial relationship between a receiver and a transmitter equipped with at least two physically separate sound sources is/are ascertained on the basis of the propagation time differences between the transmitted acoustic signals.

14. Device for interchanging information with the surroundings of mobility aids and/or for acoustically detecting the environment of a mobility aid by determining the position and/or the movement of objects in the surroundings of a mobility aid by means of sound signals ($Si(t)$) transmitted in pulsed form and/or by means of information transmission by transmitting particular signal forms from a set of possible signal forms, wherein the device is designed to perform the method according to one of the preceding claims.

15. Device according to Claim 14 that contains multiple local controllers that each actuate multiple instances of the transducers used for environment detection for transmission and/or can evaluate acoustic signals picked up by the transducers, wherein the device is designed such that, for the purpose of evaluation, signals from a subregion of the environment are evaluated in at least one local controller in each case and hence the information produced by means of multiple transducers about the detected environment is provided for further processing and/or wherein the device further has at least one local controller, which is not mounted directly on the vehicle shell, and/or wherein the controllers, in particular for the purpose of coordinating the time response of the acoustic transmissions, are in sync with one another by virtue of suitable means.

16. Device according to Claim 14 or 15 that has a control device designed to control the signal form and/or the signal strength characteristic and/or at least one signal piece sequence and/or the frequency characteristic and/or the frequency band of at least one of the sound signals ($Si(t)$) sent by the by means of the device and/or of the sound signals ($Si(t)$) sent for the purpose of characterizing the mobility aid.

17. Device according to one of Claims 14 to 16, having an acoustic sensor that has a diaphragm, configured for transmitting and/or receiving sound signals ($S_i(t)$), having at least two subregions having different resonance properties from one another in each case and that is configured such that the different resonance properties can each be used by means of at least one electromechanical transducer coupled to the diaphragm, by virtue of respective actuation of the diaphragm at an actuation frequency matched to a respective resonance property.

18. Mobility aid, in particular a motor vehicle, having a device according to one of Claims 14 to 17.

**Revendications**

1. Procédé d'échange d'informations avec l'environnement de moyens de déplacement et/ou de détection acoustique de l'environnement d'un moyen de déplacement par détermination de la position et/ou du mouvement d'objets dans l'environnement d'un moyen de déplacement au moyen de signaux sonores (Si(t)) émis de manière impulsionnelle, une émission sonore qui présente des impulsions (P$_i$) ayant des fréquences centrales $f_{ci}$ différentes les unes des autres étant effectuée de telle sorte qu'une plage de fréquences utilisée pour les signaux sonores (Si(t)) impulsionnels est divisée en des bandes de fréquences qui possèdent respectivement l'une des fréquences centrales $f_{ci}$ utilisées et les fréquences centrales des bandes voisines $f_{ci}$, $f_{ci+1}$ ayant un écart minimal prédéterminé entre elles,

   **caractérisé en ce que**

   les impulsions (P$_i$) ayant des fréquences centrales $f_{ci}$ différentes les unes des autres sont au moins temporairement émises simultanément, l'écart minimal prédéterminé pour les impulsions (P$_i$) émises simultanément sur les fréquences centrales des bandes voisines $f_{ci}$, $f_{ci+1}$ et qui présentent une durée d'impulsion Tp satisfaisant la condition

   $$|f_{ci+1} - f_{ci}| > \frac{10}{T_P},$$ les impulsions présentant respectivement, à l'intérieur de la durée d'impulsion, un modèle d'impulsion qui présente une séquence de segments de signal caractéristique et les fréquences centrales utilisées se trouvant dans un rapport de fréquence entier les unes par rapport aux autres.

2. Procédé selon la revendication 1, au moins une impulsion sonore (P$_i$) qui présente des fréquences au-dessous de la limite des fréquences ultrasonores de 20 kHz étant reçue et utilisée.

3. Procédé selon la revendication 1 ou 2, les impulsions (P$_i$) ayant des fréquences centrales $f_{ci}$ différentes les unes des autres étant émises temporairement les unes à la suite des autres.

4. Procédé selon l'une des revendications précédentes, les durées d'impulsion utilisées lors d'une et de la même fréquence centrale $f_{ci}$ se différenciant les unes des autres dans des cycles de transmission différents et/ou les impulsions sonores (P$_i$) émises au sein d'une plage de temps de l'ordre de grandeur d'un cycle de transmission impulsions transmises ayant des fréquences centrales $f_{ci}$ différentes les unes des autres présentant des durées d'impulsion différentes les unes des autres et/ou au sein d'une plage de temps de l'ordre de grandeur d'un cycle de transmission, des impulsions sonores (P$_i$) ayant des fréquences centrales $f_{ci}$ différentes les unes des autres étant émises, lesquelles commencent et/ou se terminent à des instants respectivement différents.

5. Procédé selon l'une des revendications précédentes, selon lequel, dans le cas des composantes de signal ayant une fréquence centrale $f_{ci}$ plus basse, des impulsions (P$_i$) de durée plus longue sont utilisées de préférence et/ou des impulsions (P$_i$) sont émises moins fréquemment que dans le cas des composantes de signal ayant une fréquence centrale $f_{ci}$ plus élevée et/ou en ce que les impulsions sonores (P$_i$) générées à des fréquences centrales $f_{ci}$ différentes possèdent des intensités de signal différentes.

6. Procédé selon l'une des revendications précédentes, une fréquence de signal générée à une fréquence centrale $f_{ci}$ fluctuant dans la plage de la fréquence centrale de préférence dans une bande de fréquences jusqu'à +/-1,5/T$_{Pi}$, T$_{Pi}$ étant la durée d'impulsion utilisée à la fréquence centrale dans le cycle de transmission respectif.

7. Procédé selon l'une des revendications précédentes, une impulsion acoustique (P$_i$) étant émise, laquelle possède un segment de signal ayant une fréquence fixe à l'intérieur de la durée d'impulsion et/ou un segment de signal ayant une fréquence dépendante du temps, notamment une fréquence modulée, à l'intérieur de la durée d'impulsion.

8. Procédé selon l'une des revendications précédentes, un signal sonore étant émis dans une bande de fréquences sélectionnée dans laquelle une densité de signal brouilleur inférieure à une valeur de seuil de densité de signal brouilleur prédéfinie dominait avant l'émission du signal sonore et/ou au moins un signal acoustique défini étant émis, lequel possède une forme de signal choisie de telle sorte que la forme de signal choisie se différentie respectivement des formes de signal des signaux acoustiques qui dominaient avant l'émission du signal acoustique défini et/ou en ce qu'au moins une fréquence centrale étant variée en fonction de la situation de brouillage dans le cas où un brouillage suffisamment important se produit dans la position utilisée jusqu'à présent.

9. Procédé selon l'une des revendications précédentes, selon lequel, notamment pour une communication entre des moyens de déplacement, des signaux sonores émis par le moyen de déplacement, lesquels sont **caractérisés par** plusieurs fréquences centrales, sont enregistrés et interprétés par d'autres moyens de déplacement, notamment des véhicules ou des dispositifs dans l'environnement d'un véhicule, et/ou selon lequel, en vue de la transmission d'informations depuis et/ou vers le moyen de déplacement, des signaux sonores destinés à cet effet, lesquels sont **caractérisés par** plusieurs fréquences centrales, sont sélectionnés à partir d'un ensemble de signaux sonores possibles connus des partenaires de transmission respectifs, puis émis.

10. Procédé selon l'une des revendications précédentes, les signaux sonores émis étant utilisés pour l'identification acoustique du moyen de déplacement et/ou la forme du signal et/ou la courbe d'intensité du signal et/ou au moins une séquence de segments de signal et/ou la courbe de fréquence et/ou la bande de fréquences d'un signal émis étant sélectionnés pour l'identification acoustique du moyen de déplacement en fonction d'une probabilité calculée d'une collision avec l'au moins un objet, notamment un deuxième moyen de déplacement.

11. Procédé selon l'une des revendications précédentes, un signal électrique généré à partir de l'écho d'un signal reçu étant amplifié avec une amplification dépendant du temps de propagation d'écho du signal sonore reçu avant une interprétation du signal sonore reçu en vue de déterminer la position et/ou le mouvement d'un premier objet.

12. Procédé selon l'une des revendications précédentes, selon lequel, pour l'interprétation des signaux sonores, une séquence de mesure concernant un déroulement dans le temps des durées de périodes du signal sonore reçu est déterminée et fournie puis comparée avec au moins une séquence de référence, et une information de comparaison concernant un écart entre la séquence de mesure et la séquence de référence est déterminé et au moins une séquence partielle de l'information de comparaison est prise en compte pour déterminer une information concernant au moins ledit un parmi les signaux sonores ($S_i(t)$) émis et pour déterminer la position et/ou le mouvement du premier objet et/ou pour déterminer la position et/ou le mouvement et/ou au moins une caractéristique de forme d'au moins un deuxième objet réfléchissant qui se trouve entre le véhicule propre et le premier objet.

13. Procédé selon l'une des revendications précédentes, la relation spatiale entre un observateur, équipé d'au moins deux récepteurs acoustiques séparés dans l'espace, et une source sonore et/ou la relation spatiale entre un récepteur et un émetteur équipé d'au moins deux sources sonores séparées dans l'espace étant déterminée à l'aide des différences de temps de propagation des signaux acoustiques émis entre eux.

14. Dispositif d'échange d'informations avec l'environnement de moyens de déplacement et/ou pour la détection acoustique de l'environnement d'un moyen de déplacement par détermination de la position et/ou du déplacement d'objets dans l'environnement d'un moyen de déplacement au moyen de signaux sonores ($S_i(t)$) émis de manière impulsionnelle et/ou par transmission d'informations par émission de formes de signal définies issues d'un ensemble de formes de signal possibles, le dispositif étant conçu pour mettre en oeuvre le procédé selon l'une des revendications précédentes.

15. Dispositif selon la revendication 14, lequel contient plusieurs contrôleurs locaux qui peuvent respectivement commander en émission plusieurs transducteurs utilisés pour l'acquisition de l'environnement et/ou interpréter des signaux acoustiques enregistrés par les transducteurs, le dispositif étant configuré de telle sorte que pour l'interprétation, les signaux d'une zone partielle de l'environnement sont interprétés respectivement dans au moins un contrôleur local et les informations à propos de l'environnement détecté, générées au moyen de plusieurs transducteurs, sont ainsi mises à disposition pour un traitement supplémentaire et/ou le dispositif possédant en outre au moins un contrôleur local qui n'est pas monté directement sur l'enveloppe extérieure du véhicule et/ou les contrôleurs étant synchronisés entre eux par des moyens appropriés, notamment en vue d'accorder le comportement dans le temps des émissions acoustiques.

16. Dispositif selon la revendication 14 ou 15, lequel possède un dispositif de commande qui est configuré pour commander la forme du signal et/ou la courbe d'intensité du signal et/ou au moins une séquence de segments de signal et/ou la courbe de fréquence et/ou la bande de fréquences d'au moins l'un des signaux sonores ($S_i(t)$) émis par le au moyen du dispositif et/ou des signaux sonores ($S_i(t)$) émis en vue de l'identification du moyen de déplacement.

17. Dispositif selon l'une des revendications 14 à 16, possédant un capteur acoustique qui présente une membrane conçue pour émettre et/ou recevoir des signaux sonores ($S_i(t)$) comprenant au moins deux zones partielles ayant des propriétés de résonance respectivement différentes les unes des autres et qui est conçu de telle sorte que les propriétés de résonance différentes peuvent respectivement être utilisées au moyen d'au moins un transducteur électromécanique accouplé à la membrane par excitation respective de la membrane avec une fréquence d'excitation adaptée à une propriété de résonance respective.

**18.** Moyen de déplacement, notamment un véhicule automobile, comprenant un dispositif selon l'une des revendications 14 à 17.

**FIG. 1**

EP 2 791 699 B1

FIG. 2

EP 2 791 699 B1

**FIG. 3**

EP 2 791 699 B1

## FIG. 4a

## FIG. 4b

## FIG. 4c

## FIG. 4d

## FIG. 4e

## FIG. 4f

P1  P2  P3

0 ms  10 ms  20 ms  30 ms  40 ms  50 ms  60 ms  70 ms  80 ms  90 ms  100 ms  110 ms  120 ms

FIG. 5

**FIG. 6**

**FIG. 7**

EP 2 791 699 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009027842 A1
- EP 2144069 A2
- WO 2011009786 A1
- DE 10225614 A1
- DE 102008044366 A1
- DE 102008054789 A1
- DE 102008044351 A1
- DE 4410895 A1
- DE 102010031573
- DE 102010027780
- DE 3806847 A1
- US 6690616 B1
- EP 2251710 A2
- EP 2312333 A1
- WO 2010063510 A1